# EUROPEAN PATENT SPECIFICATION

(11) **EP 3 873 792 B1**
(45) Date of publication and mention of the grant of the patent: **20.08.2025**
(21) Application number: 19805739.0
(22) Date of filing: 28.10.2019
(51) Int. Cl.: B62D 65/02, B62D 65/18

(54) **SYSTEM FOR POSITIONING A MOBILE FRAME, IN PARTICULAR A FRAME FOR SUPPORTING VEHICLE BODY SHELLS IN A PROCESSING STATION**
SYSTEM ZUR POSITIONNIERUNG EINES MOBILEN RAHMEN, INSBESONDERE EINES RAHMEN ZUR UNTERSTÜTZUNG VON FAHRZEUGSKARROSSERIE AUF EINER VERARBEITUNGSSTATION
SYSTÈME DE POSITIONNEMENT D'UN CHÂSSIS MOBILE, EN PARTICULIER POUR SUPPORT DE CARROSSERIES DE VÉHICULE SUR UN POSTE DE TRAVAIL

(30) Priority: 31.10.2018 IT 201800009976
(43) Date of publication of application: 08.09.2021
(73) Proprietor: Stellantis Europe S.p.A., 10135 Torino, (TO) (IT)
(72) Inventor: MONTI, Denny, 10135 Torino (IT); POLIMENI, Antonino, 10135 Torino (IT); VERGER, Marco, 10135 Torino (IT); BIANCARDI, Diego, 10135 Torino (IT); D'AMBROSIO, Aldo, 10095 Grugliasco (Torino) (IT); FANTON, Saverio, 10095 Grugliasco (Torino) (IT); GHIRARDI, Ugo, 10095 Grugliasco (Torino) (IT)
(74) Representative: Buzzi, Notaro & Antonielli d'Oulx S.p.A.
(86) International application number: PCT/IB2019/059225
(87) International publication number: WO 2020/089770

(56) References cited:
- US-A1- 2002 170 160
- US-A1- 2008 116 247
- US-A1- 2011 138 601
- US-A1- 2015 259 017
- US-B1- 6 196 372

## Description

### Field of the invention

The present invention relates to systems for positioning mobile frames (commonly known as "pallets") for supporting motor-vehicle body shells in a processing station, where in particular the mobile frame is positioned with respect to a fixed frame forming part of the station itself and functioning as support for the mobile frame. In particular, the invention has been developed with reference to positioning systems for pallets used in processing stations of a bodywork plant. Document US 2002/170160 A1 discloses known positioning systems.

### Prior art

In industrial plants for the production and assembly of motor vehicles there is the need to handle and move motor-vehicle body shells being defined or already partially assembled through the welding stations and the subsequent processing stations so as to complete assembly according to the sequence imposed in the design stage.

The current production lines are, however, conceived in a substantially rigid way as regards movement of mobile frames or pallets for carrying motor-vehicle body shells in so far as the movement is exclusively entrusted to floor conveying systems, which automatically position the mobile frame in the processing station.

The operations of positioning and geometrical referencing are hence characterised by an extremely high precision and repeatability. To provide a simplified picture of the situation, known solutions are conceived in such a way that the system for handling the mobile frames and the system for positioning thereof have levels of positioning precision that are substantially comparable or in any case compatible with one another.

However, the inventors have noted how significant advantages could be achieved from rethinking of the production-line structures and in particular from elimination of underground structures and of structures arranged in an overhead position in so far as this is likely to reduce the requirements of the industrial building that houses the plant, consequently widening the choice of buildings.

In particular, by so doing, there is no longer the need to carry out civil works for laying underground line structures necessary for operation of the floor conveyors, and likewise the need to choose or erect buildings the vaults of which are able to support a high load at the nodes.

In the perspective of redesigning an industrial installation assuming elimination of underground or embedded structures, a very interesting possibility is constituted by the movement of mobile frames for supporting motor-vehicle body shells by means ofautonomous handling and movement devices, such as the so-called AGVs (Automated Guided Vehicles), which can transport the mobile frames/pallets through the plant following pre-set paths and can likewise position the pallets in a processing station.

The prior art offers in this regard an extremely large number of examples of motor-vehicle production lines in which the pallets for supporting motor-vehicle body shells are moved via AGVs. In known solutions, generally each AGV transports a single pallet throughout the processing cycle that the body shell is to undergo.

If the use of handling and movement solutions based upon AGVs on the one hand makes it possible to do without the civil works for laying underground the system for moving and guiding the floor conveyors, on the other hand it presents levels of performance in terms of positioning precision that are far inferior. This performance gap is mainly due to the fact that an automatic handling and movement device such as an AGV suffers from very poor repeatability as regards the operation of entry into a fixed station and its positioning therein. Hence, the mobile frame (pallet) carried by the vehicle in question arrives in the station with a positioning error that is one or two orders of magnitude higher than the errors allowed for proper execution of the processing operations on the vehicle body shell.

In addition, since in known solutions each vehicle is generally associated to one and only one mobile frame/pallet, the number of automated vehicles to be used in the plant may reach levels such as to render impracticable an efficient management of the paths, in addition to increasing considerably the investment necessary for equipping an industrial installation.

### Object of the invention

The object of the present invention is to solve the technical problems mentioned previously. In particular, the object of the invention is to provide a system for positioning a mobile frame with respect to a fixed frame - the latter being associated to a processing station - that will enable operation with very small positioning tolerances compatible with the processing operations carried out on a motor-vehicle body shell, albeit using a low-precision handling and movement device.

### Summary of the invention

The object of the present invention is achieved by a positioning system, a receiving element, a processing station, and a method having the features of the attached claims, which form an integral part of the technical disclosure provided herein in relation to the invention.

### Brief description of the drawings

The invention will now be described with reference to the annexed drawings, which are provided purely by way of non-limiting example and in which:
- Figure 1 is a perspective view of a positioning system according to the invention, represented with the components separate from one another;
- Figure 2 is a perspective view of a component of the system of Figure 1, illustrated in partial see-through view;
- Figure 3 is a top plan view of the component of Figure 2;
- Figures 3A and 3B are cross-sectional views according to the traces A-A and B-B of Figure 3;
- Figure 4 is a schematic view corresponding to that of Figure 3;
- Figure 5 is a perspective view of a fixed frame for supporting motor-vehicle body shells that is equipped with a positioning system according to the invention;
- Figure 6A is a schematic view of a handling device for the frame represented in Figure 6B, Figure 6B is a perspective view of a mobile frame associated to a processing station and configured for supporting the fixed frame of Figure 5, whilst Figures 6C and 6D illustrate a possible embodiment of a release device that can be applied to the handling device and/or to the frame of Figure 6B;
- Figures 7 and 8 illustrate a sequence of release of the mobile frame of Figure 6B on the fixed frame of Figure 5;
- Figure 9 is a detailed view according to the arrow IX of Figure 8, whilst Figure 8A illustrates a variant of the positioning system of Figure 1, once again according to the invention;
- Figures 10, 11, and 12 illustrate, in cross-sectional view according to the trace A-A of Figure 3, a sequence for positioning the mobile frame with respect to the fixed frame carried out using the positioning system according to the invention;
- Figures 10A, 11A, and 12A are schematic top plan views corresponding to the conditions of Figures 10, 11, and 12;
- Figures 13A and 13B are cross-sectional views according to the traces A-A and B-B of Figure 14, where Figures 13 and 14 illustrate a further embodiment of the invention;
- Figure 15 is a schematic top plan view similar to that of Figure 4, but referring to the further embodiment;
- Figures 16, 17, and 18 illustrate, in a cross-sectional view according to the trace A-A of Figure 14, a sequence for positioning the mobile frame with respect to the fixed frame carried out using the positioning system according to the further embodiment of the invention;
- Figures 16A, 17A, and 18A are schematic top plan views corresponding to the conditions of Figures 16, 17, and 18; and
- Figures 19, 20, and 21 illustrate different configurations of positioning of the positioning system according to the invention on a fixed frame.

### Detailed description

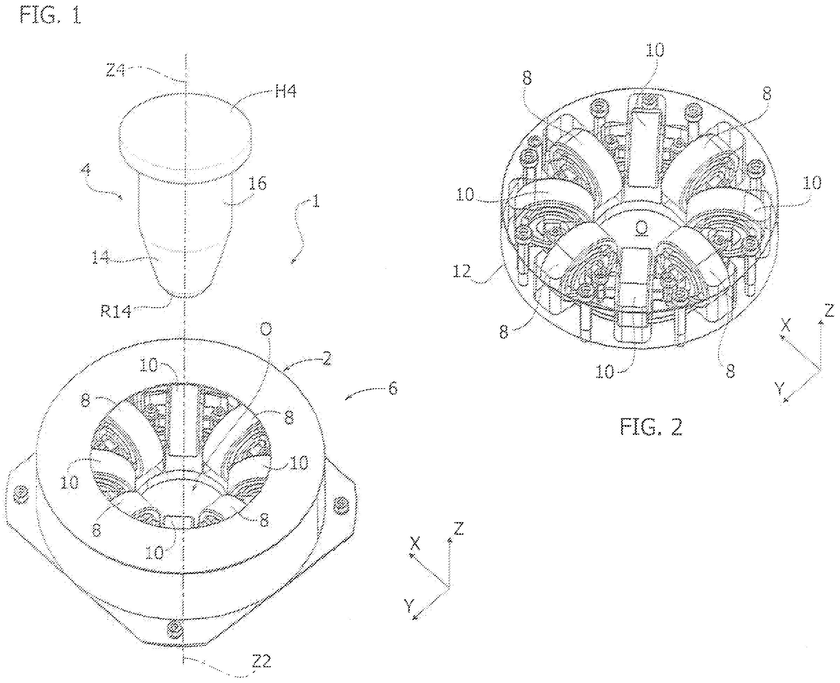

The reference number 1 in Figure 1 designates as a whole a system for positioning a mobile frame with respect to a fixed frame according to the invention. The system 1 comprises a receiving element 2 configured for connection to one of the mobile frame and the fixed frame, and a pin 4 configured for connection to the other of the mobile frame and the fixed frame. The pin 4 is configured for coupling within the receiving element 2 in an engagement direction defined by a main axis Z2 of the receiving element 2.

In particular, the axis Z2 is a longitudinal axis of an orifice O of the receiving element 2, where the term "longitudinal" is here to be understood only with reference to the receiving element 2 and not with reference to the cartesian system X-Y-Z that is represented in the figures, which is consistent in all figures and applies to a processing station according to the invention. The system X-Y-Z identifies the three notable spatial directions: longitudinal direction (X), transverse direction (Y), vertical direction (Z).

With reference to Figures 1, 2, 3, and 4, the receiving element 2 comprises a first ring of rollers 8 and a second ring of rollers 10, where the two rings of rollers 8, 10 are preferably arranged so as to be centred on the axis Z2 and in such a way that the rollers of the first ring 8 alternate with the rollers of the second ring 10 so that a roller 8 of the first ring is comprised between two rollers 10 of the second ring, and vice versa.

The rollers of the ring 8 have an axis of rotation γ8, whilst the rollers of the ring 10 have an axis of rotation γ10, where the axes of rotation γ8 and γ10 belong to planes orthogonal to the main axis Z2 and preferably belong to one and the same plane XY orthogonal to the axis Z2. In some embodiments, the axes γ8 belong to a first plane orthogonal to the axis Z2, whereas the axes γ10 belong to a second plane orthogonal to the axis Z, set at a longitudinal distance from the first plane (for example, in the view of Figure 1 the plane to which the axes γ10 belong is above the plane to which the axes γ8 belong).

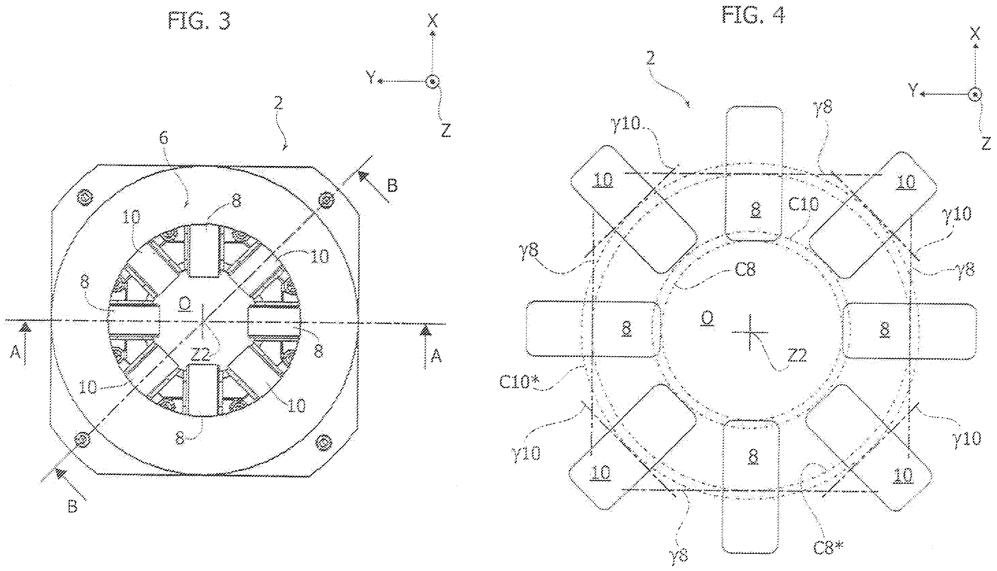

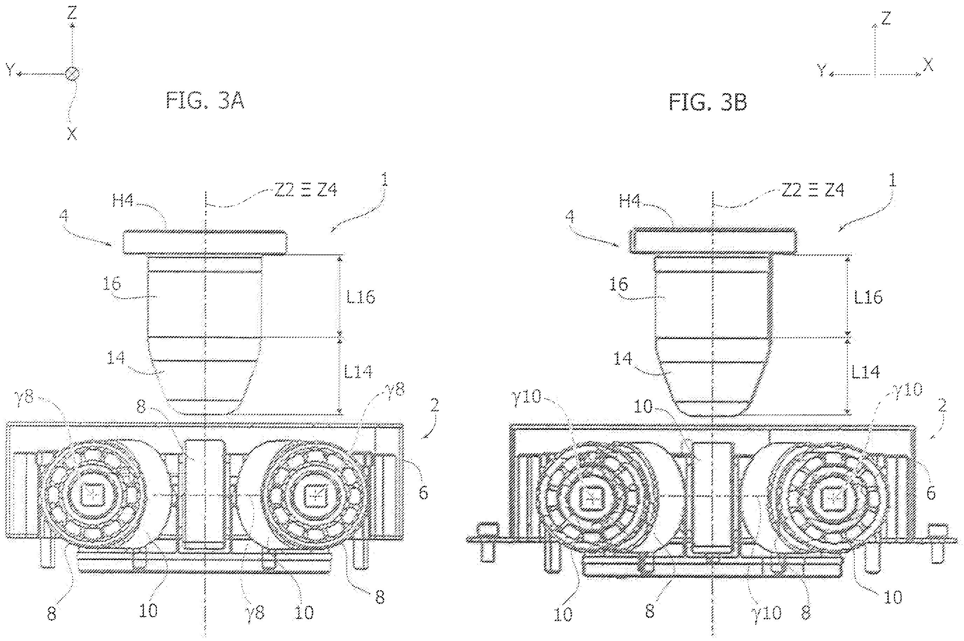

The rollers 8 and the rollers 10 functionally come to define the orifice O, as may be clearly seen in Figure 3. In this way, the orifice O has a pseudopolygonal shape that derives from the arrangement of the peripheral (rolling) surfaces of the rollers 8, 10 (and consequently of the axes γ8 and γ10) in a position tangential to respective circumferences.

In particular, with reference to Figure 4, the rollers of the first ring 8 have peripheral (rolling) surfaces set tangential to a first circumference C8 centred on the axis Z2, whereas the outer surfaces of the rollers of the second ring 10 are set tangential to a second circumference C10, once again centred on the axis Z2, where the diameter of the circumference C8 is smaller than the diameter of the circumference C10.

Moreover, with reference to Figure 4, the axes γ8 are arranged in a position tangential to a circumference C8*, whereas the axes γ10 are arranged in a position tangential to a circumference C10*, having a diameter larger than that of the circumference C8*.

Since the rollers 8, 10 preferably have the same diameter, in view of the circumstances referred to above, their radial protrusion within the orifice O is greater for the rollers 8, whereas the rollers 10 are arranged with the peripheral (rolling) surfaces set further back than the surfaces of the rollers 8, for reasons that will become clear in the ensuing description. Moreover, on account of the preferably alternating arrangement of the rollers 8, 10, an alternation of radial protrusions of the peripheral (rolling) surfaces is obtained.

In the preferred embodiment of the invention illustrated herein, the first ring of rollers comprises four rollers 8 set at equal angular distances apart (hence at 90°, with a crosswise arrangement) and the second ring of rollers likewise comprises four rollers 10 set at equal angular distances apart (hence at 90°, with a crosswise arrangement). The two rings have the preferred alternating arrangement of the rollers 8, 10, where the first ring of rollers 8 and the second ring of rollers 10 are arranged angularly staggered by 45° with respect to one another. In this way, the rollers 8, 10 are arranged at regular intervals of 45° about the axis Z2.

In the above arrangement, as may be seen in Figure 4, the rings of rollers 8 and 10 are in effect arranged in such a way that the respective axes γ8, γ10 - when prolonged - give rise to an octagonal shape, and moreover pseudo-octagonal is the shape defined in plan view by the envelope of the peripheral (rolling) surfaces of the rollers 8, 10 facing one another so as to define the orifice O (which hence itself has the pseudo-octagonal shape).

It should on the other hand be noted that the same alternation of protrusions of the outer surfaces of the rollers 8, 10 may be obtained also in a different way. For instance, it is possible to arrange the axes γ8, γ10 tangential to one and the same circumference and vary the protrusion simply by providing the rollers 8 with a diameter larger than that of the rollers 10.

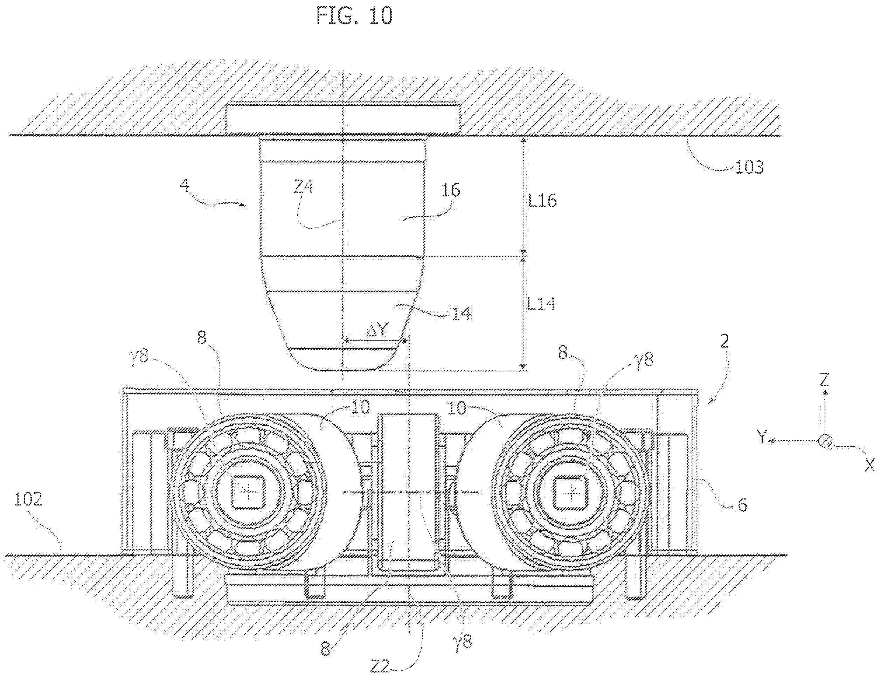

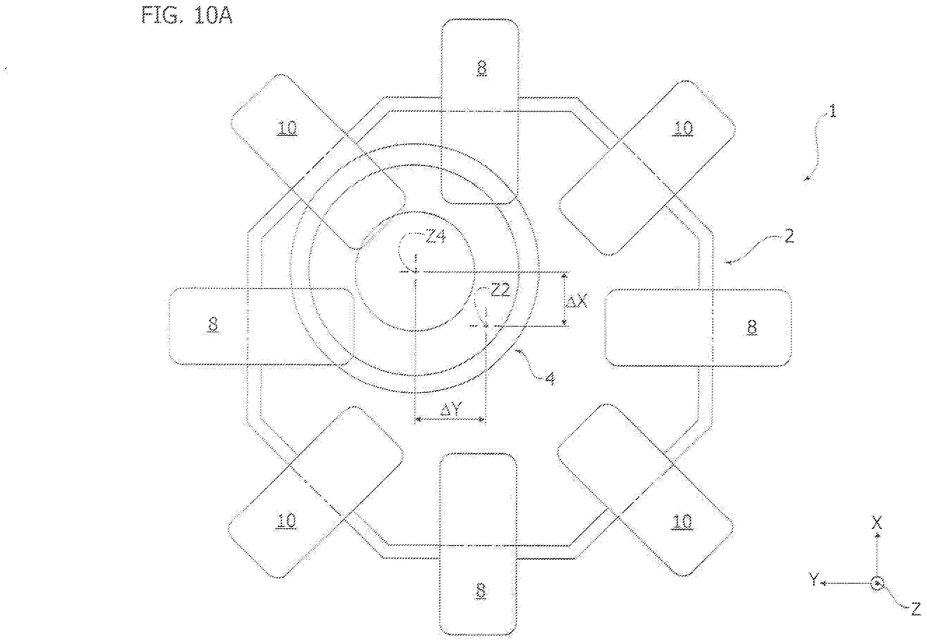

With reference to Figure 1 and to Figures 10, 11, and 12, the pin element 4 comprises a first, tapered, portion 14 and a second, cylindrical, portion 16, which develop coaxially sharing a longitudinal axis Z4 of the pin (the term "longitudinal" is here understood with reference to just the pin, and not to the reference system XYZ of the figures). The tapered portion 14 preferably has a conical geometry, which terminates at a first (free) end R14, and extends for an axial length L14 as far as the cylindrical portion 16.

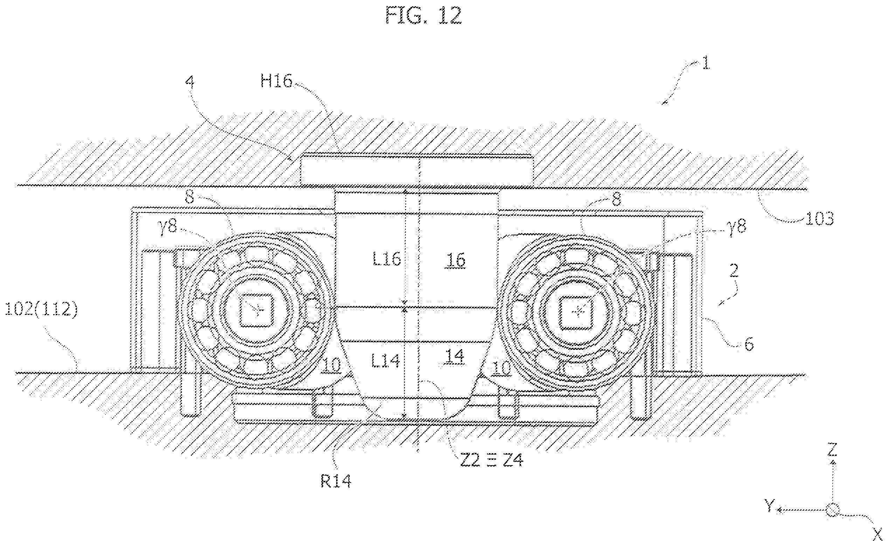

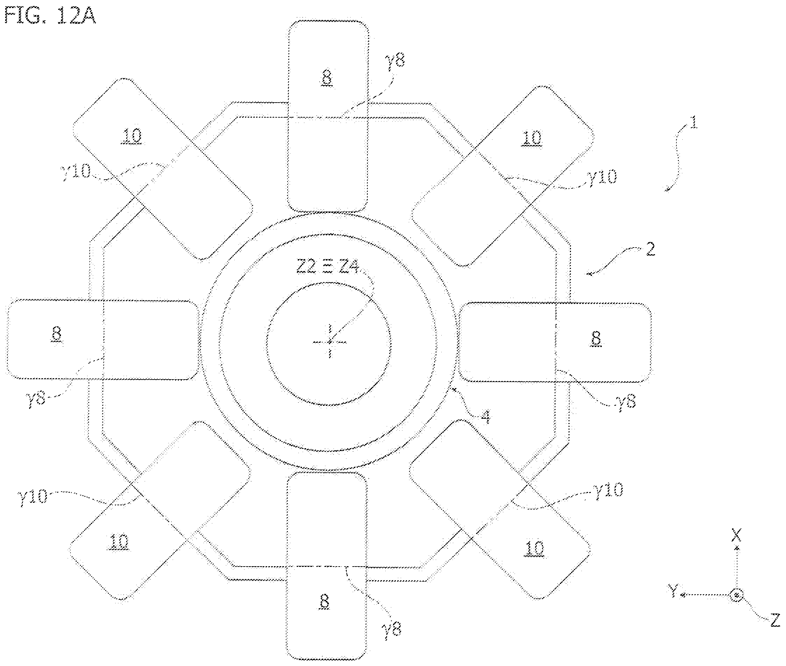

The cylindrical portion 16 develops for an axial extension L16, and the ratio L14/L16 is sized in such a way that, when the pin 4 is completely within the orifice O, the rollers of the first ring 8 bear upon the cylindrical surface 16, slightly above the interface with the surface 14 (see Figure 12). The ratio L14/L16 depends upon the amount of the positioning error that it is required to recover (as likewise upon the number of rollers 8, 10). The dimension L16 depends upon the length necessary for engaging the rollers 8, 10 and upon the overall height of the receiving element 2. The size of the rollers 8, 10 depends upon the load to be withstood during introduction of the pin 4.

It is to be borne in mind that in alternative embodiments the tapered portion 14 may exhibit a different geometry that envisages a reduction of diameter towards the end R14 of the pin 4. For instance, parabolic profiles or even circular profiles with a large radius may be envisaged.

The pin element 4 is configured for being connected to the fixed frame or to the mobile frame at a second end H4 that is adjacent to the cylindrical portion 16, whereas the end R14 constitutes the free end of the pin 4 configured for encountering, first, the orifice O and the rollers of the rings 8, 10 in the engagement direction Z2.

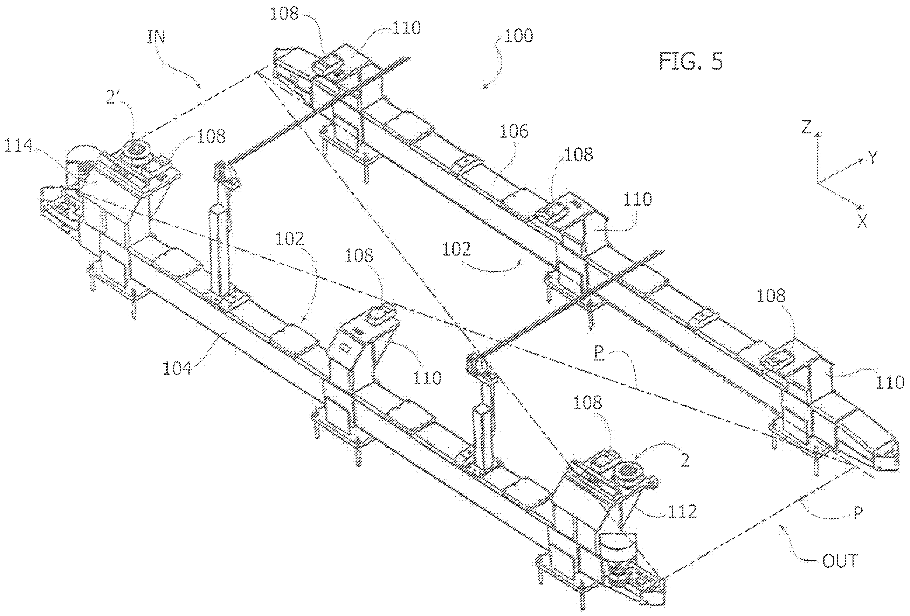

With reference to Figures 5 to 9, designated as a whole by 100 is a processing station according to a preferred embodiment of the invention. The station 100 comprises a fixed frame 102 and a mobile frame 103 (the so-called pallet), where the mobile frame can be selectively coupled to and removed from the fixed frame 102. The longitudinal direction X, the transverse direction Y, and the vertical direction Z apply directly to the station 100 and to the frame 102. As regards the frame 103, if it is referenced with respect to the same reference system, the directions are the same, whereas, if a local cartesian triad is considered, then the local directions of the frame 103 coincide with those X-Y-Z of the frame 102 and of the station 100 - as will be seen - only when the frame 103 is positioned on the frame 102 and coupled thereto.

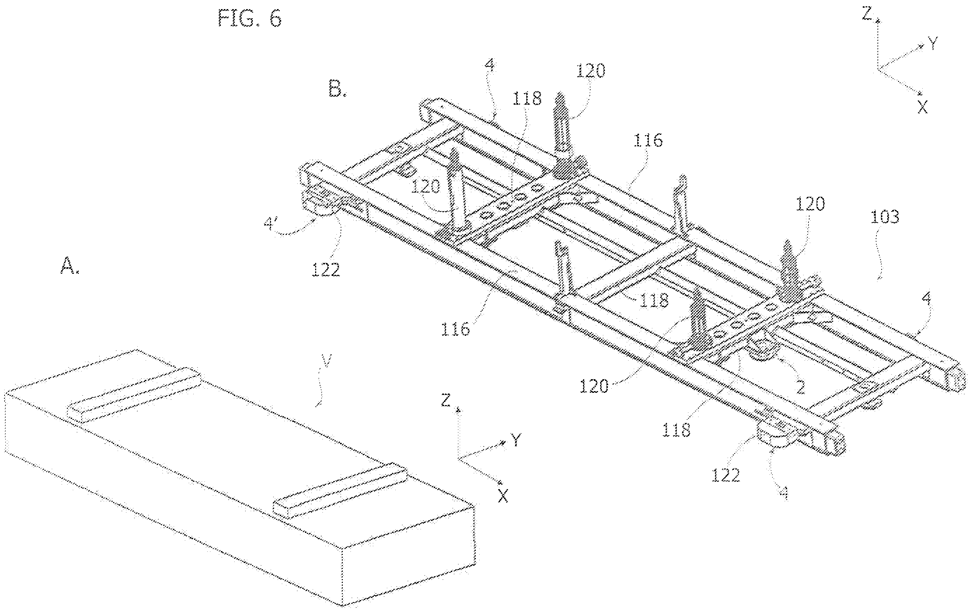

The mobile frame/pallet 103 can be picked up from the frame 102 and can be released thereon (according to the needs and/or the step of the processing cycle considered) by means of a handling device V, illustrated schematically in Figure 6A. Preferentially, the handling device V is a so-called AGV.

With reference to Figure 5, the fixed frame 102 is a frame fixed on the floor configured for supporting the mobile frame 103. The fixed frame 102 comprises a first lateral bank 104, a second lateral bank 106, and a plurality of supports 108, which are configured for supporting the mobile frame 103 when it is rested on the lateral bank 104, 106 and are configured for providing a position reference for the frame 103 along the vertical axis Z with respect to the floor (reference Z = 0).

The supports 108 are carried by brackets 110, 112, 114, which basically differ for the type of equipment with which they are provided. With reference to Figure 5, the brackets 110 are vertical supporting brackets and, as such, are equipped with just the support 108 for sustaining the frame 103 vertically.

The bracket 112 is a bracket for providing a triaxial position reference in so far as it comprises a support 108 configured for providing the position reference along the vertical axis Z and a receiving element 2 configured for providing the position reference along the longitudinal axis X and the transverse axis Y, as will be described in detail in what follows. The rollers of the first ring 8 and the rollers of the second ring 10 have the preferred arrangement illustrated in Figure 4, with four rollers 8 at 90° with respect to one another, and four rollers 10 at 90° with respect to one another, and staggered by 45° with respect to the rollers 8.

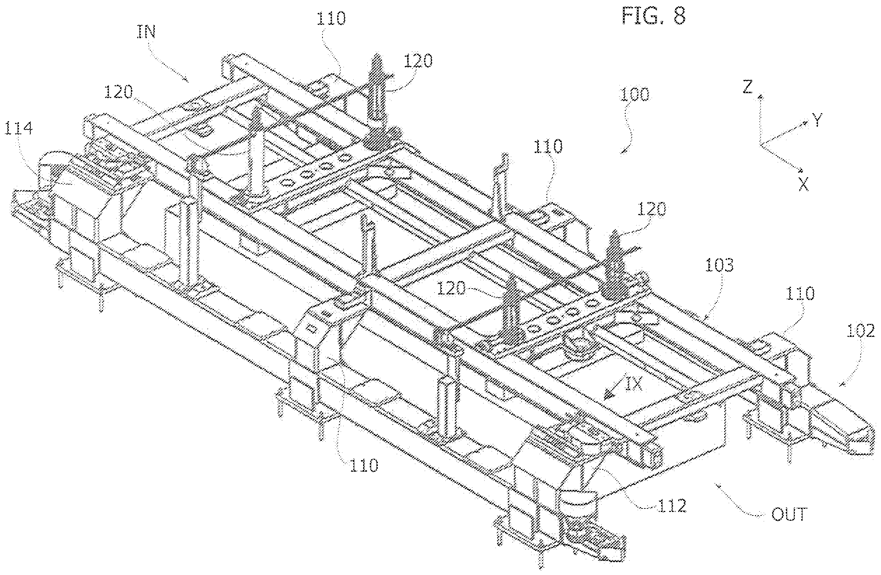

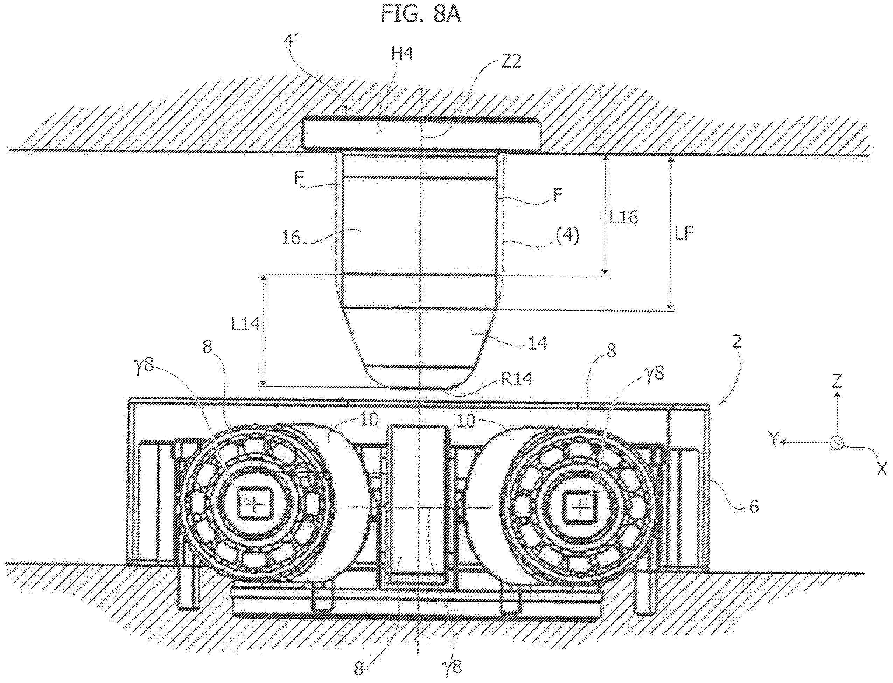

The bracket 114 is, instead, configured for providing a biaxial position reference in so far as it carries a support 108 for vertical positioning, and a further receiving element 2 is configured for being engaged by a pin 4' carried by the mobile frame 103. The pin 4' is illustrated in Figure 8A in combination with the receiving element 2, and all the references identical to those already used designate the same objects. It will thus be noted how the pin 4' has exactly the same shape as the pin 4, with the addition of two flattened areas F set in diametrally opposite positions and aligned along the longitudinal axis X, in such a way that the pin 4' and the rollers of the receiving element 2 bear upon one another only in the transverse direction Y when the pin 4' is located in the orifice O. The flattened area F extends for an axial length LF that covers at least the entire length L16, and optionally part of the length L14.

With reference to Figure 6A, the handling device V is preferably, as has been mentioned, an AGV configured for autonomous movement of the frame 103 on the floor (for this reason the device V will frequently be referred to , in an interchangeable way, as "vehicle V"), which is carried for this purpose on the back of the vehicle V. The back of the vehicle V corresponds to a top portion of the vehicle itself, which is configured for receiving the frame 103 and - for reasons that will be clarified in what follows - for vertical movement of the frame 103.

With reference to Figure 6B, the frame 103 comprises two longitudinal members 116, which extend in a longitudinal direction X, and a plurality of cross members 118, some of which carry supports 120 oriented along the vertical axis Z for supporting a motor-vehicle body shell. The longitudinal member 116 is configured for resting on the side 104 of the fixed frame 102, on which the brackets 112 and 114 are provided, and is equipped for this purpose with a pin 4 and a pin 4' in longitudinally spaced positions. The pins 4 and 4' are covered by a shield 122.

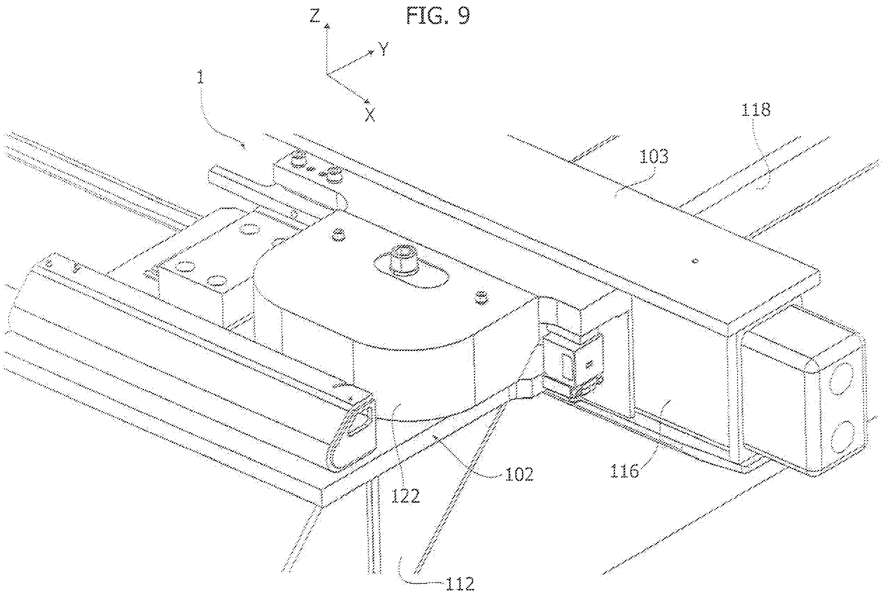

As may be seen in Figure 9, when the pin element 4 or 4' is received in the respective receiving element 2, 2', the shield 122 completely envelops the receiving element so as to prevent exposure thereof to the outside environment.

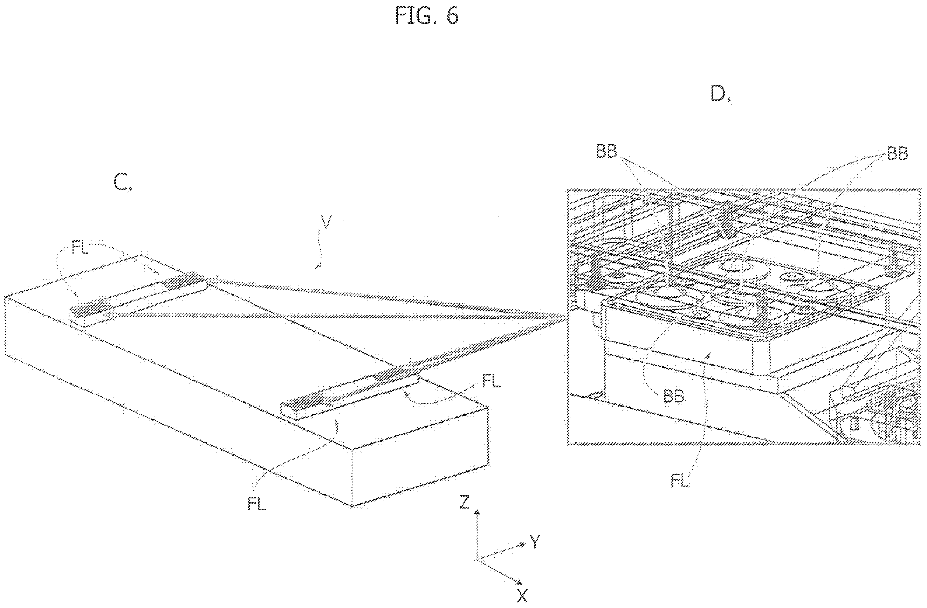

Moreover, in a preferred embodiment, the frame 103 and the handling device V are themselves equipped with a positioning device 1, where in particular the receiving element 2 is located in a position set upside down on the frame 103, whilst the pin 4 is located on the vehicle V, with the end R14 facing upwards. The device 1 for coupling between the vehicle V and the frame 103 makes it possible to keep the vehicle V and the frame 103 coupled together during movement of the vehicle V, and likewise makes it possible to assist the operations of taking-up of the frame 103 by the frame 102, and release of the frame 103 on the frame 102. Moreover, once again preferentially, the vehicle V is equipped with a release device comprising, for example, a roller or ball platform that enables relative movement of the frame 103 with respect to the vehicle V at the (mechanical) interface between them, rendering the former floating during the transients of picking-up and release. An example of release device that can be applied to the vehicle V and/or to the frame 103 is illustrated in Figures 6C (position) and 6D (detail). The release device in question is associated to the reference FL and comprises a plurality of rolling elements BB here provided as idle balls. In the embodiment illustrated here, the vehicle V is equipped with four units FL (arranged in the proximity of four opposite corners of the vehicle V) with five balls BB each arranged quincuncially, as illustrated in Figure 6D. Preferably, the balls BB are carried by a supporting plate SP, which also carries the seats for the balls BB and is in turn preferably mounted in a seat specifically provided on the vehicle V. It is to be borne in mind, however, that the number and arrangement of the units FL and of the balls BB may be varied according to the needs, and it is likewise possible to set the release devices FL on the frame 103 (with the balls BB oriented towards the vehicle V) or else again it is possible to adopt hybrid arrangements in which a part of the release devices FL is set on the vehicle V, while another part is set on the frame 103.

At a general level, falling within the scope of the invention is provision of a release device at the interface between the handling device V (whatever this may be) and the mobile frame 103 that is handled by the handling device V. The release device preferably comprises one or more rolling elements that can enable the relative movement required at the interface itself, and may be provided both on the mobile frame 103 and on the handling device V (even in combination, as has been seen).

This means that, when the handling device V is provided as automated guided vehicle, it may in the limit be of a completely conventional type, i.e., without the release device. The latter may be installed on board the frame 103 in the form, for example, of arrays of rolling elements.

In addition, for certain applications, even not necessarily linked to the motor-vehicle sector (for example, the logistics industry and the mass-distribution industry), in the case where the load weighing upon the frame 103 is low, the release device may be obtained even without the use of rolling elements, but relying upon one or more sectors or elements made of a material with low coefficient of (sliding) friction.

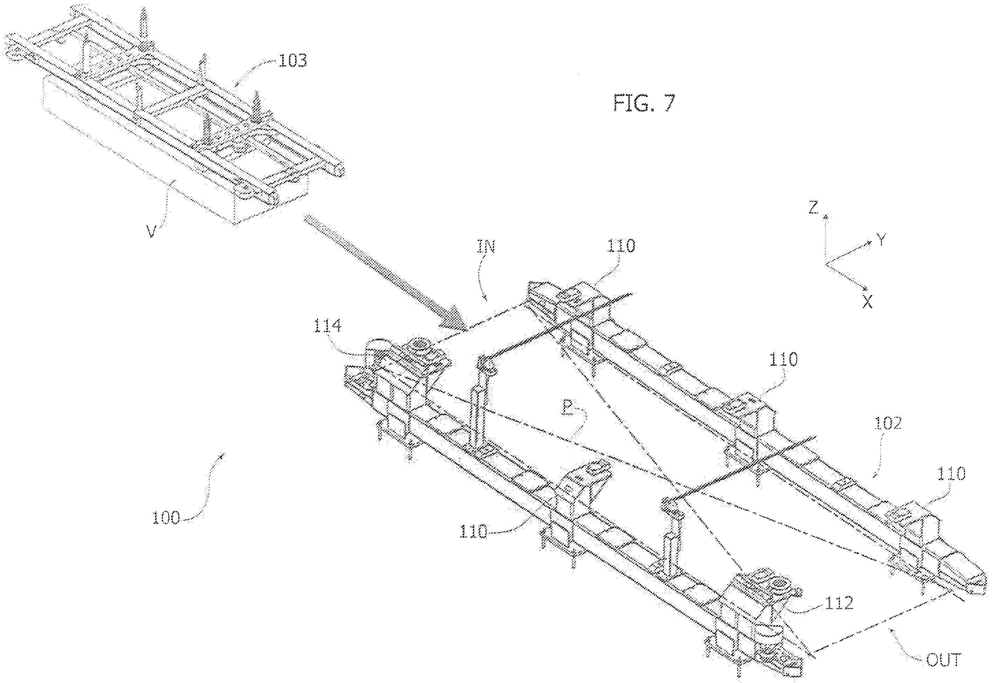

With the aid of Figures 7, 8, and 10 to 12, there now follows a description of a sequence of coupling between the mobile frame 103 and the fixed frame 102, in which a position referencing of the frame 103 with respect to the frame 102 is simultaneously carried out in the processing station 100.

With reference to Figures 7 and 8, the handling device (vehicle) V is configured for picking up the mobile frame 103 from the fixed frame 102 or releasing it thereon in the station 100 so as to position in the station a motor-vehicle body shell that is to undergo processing operations, for example welding. Thanks to the provision of the positioning system 1, it is possible to position the vehicle body shell accurately relative to the processing station 100 (i.e., to the frame 102) in a completely automatic and purely mechanical way.

In particular, with reference to the positioning system 1, the handling device V is configured for providing a coupling of the pin element 4, 4' within the corresponding receiving element 2 at the moment of release of the mobile frame 103 on the fixed frame 102, and for enabling extraction of the pin element 4, 4' from the corresponding receiving element 2 at the moment of picking-up of the mobile frame 103 from the fixed frame 102.

Since the engagement directions Z2 are oriented along the vertical axis Z, this is physically achieved by a vertical movement (i.e., a movement comprising at least one vertical component) of the mobile frame 103 with respect to the fixed frame 102.

For this reason, as has been mentioned, the vehicle V is substantially configured as a vertically mobile platform so as to assist the variations in height of the frame 103 necessary to complete the operations referred to above. During vertical movement of the frame 103, the aforesaid variations in height also enable disengagement or engagement of the pin 4 on the vehicle V with respect to the receiving element 2 on the frame 103.

With reference to Figures 5 and 7, the fixed frame 102 comprises an entry section IN, an exit section OUT, and a lay-by area P (indicated schematically by a dashed and dotted line), set between the entry section IN and the exit section OUT and between the lateral bank 104, 106. It should be noted that the terms "entry section" and "exit section" only correspond to a functional specification. The vehicle V may enter the station in any direction of travel, so that it may happen that what functionally corresponded to an "entry section" in a previous working cycle, may become an "exit section" for a subsequent working cycle.

The lay-by area P is understood as an area of manoeuvre for the handling device/vehicle V, i.e., an area in which the handling device/vehicle V arrives, parks, or in general interacts for the time necessary to release the frame 103 on the frame 102 or to pick up the frame 103 from the frame 102, and from which it moves away, exiting through the exit section OUT.

As may be seen in Figure 7, when the operation to be carried out is release of the mobile frame 103 (which is carrying a motor-vehicle body shell, here not illustrated to facilitate vision of the other components) on the fixed frame 102, the handling device/vehicle V enters the lay-by area P through the entry section IN.

The automatic guiding system of the handling device/vehicle V is configured so that it will stop in the lay-by area P, positioning the mobile frame 103 with respect to the fixed frame 102 in such a way that the pin 4 comes to be located substantially in a position corresponding to the orifice O of the respective receiving element 2, and the pin 4' comes to be located substantially in a position corresponding to the orifice O of the respective receiving element 2.

The back of the vehicle V is in this step held in a raised position with respect to the frame 102, and in particular in a position such that the bottom ends of the frame 103 are above the level of the supports 108 and the pins 4, 4' are located above the level of the receiving elements 2. Otherwise, even just entry of the vehicle V into the lay-by area P would be impossible, as likewise positioning of the frame 103 in the required preliminary position.

With reference to Figures 10 and 10A, on account of the (relatively) poor precision of positioning of the handling device/vehicle V with respect to the frame 102, even if positioning of the frame 103 on the handling device/vehicle V presents high repeatability, the frame 103 arrives with the pins 4, 4' misaligned with respect to the engagement direction Z2 of the corresponding receiving element. Without the positioning device 1, release of the frame 103 on the frame 102 would occur with the former in a position completely out of tolerance along the transverse axis Y and along the longitudinal axis X (along Z the reference is in any case provided by the supports 108, but this is clearly not sufficient).

In this regard, Figures 10 and 10A illustrate a possible starting condition of the operations of release of the mobile frame 103 on the fixed frame 102, in particular a condition in which the handling device V has reached the lay-by area P with a positioning such that the axis Z4 of the pin 4 presents a longitudinal deviation ΔX and a transverse deviation ΔY with respect to the axis Z2 of the receiving element 2 (even though not illustrated for reasons of economy, a very similar situation arises also for the pin 4': the deviations may, of course, be different but the situation is conceptually the same).

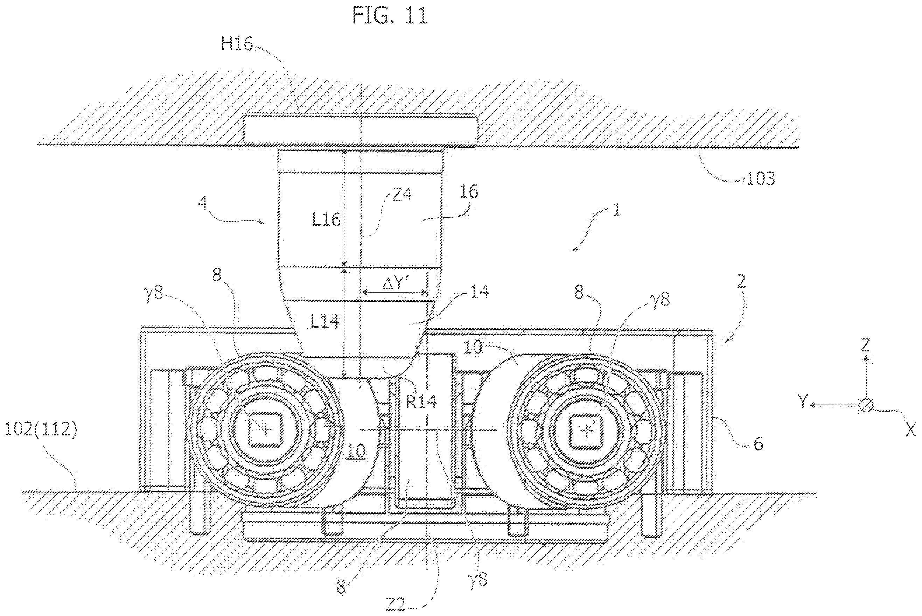

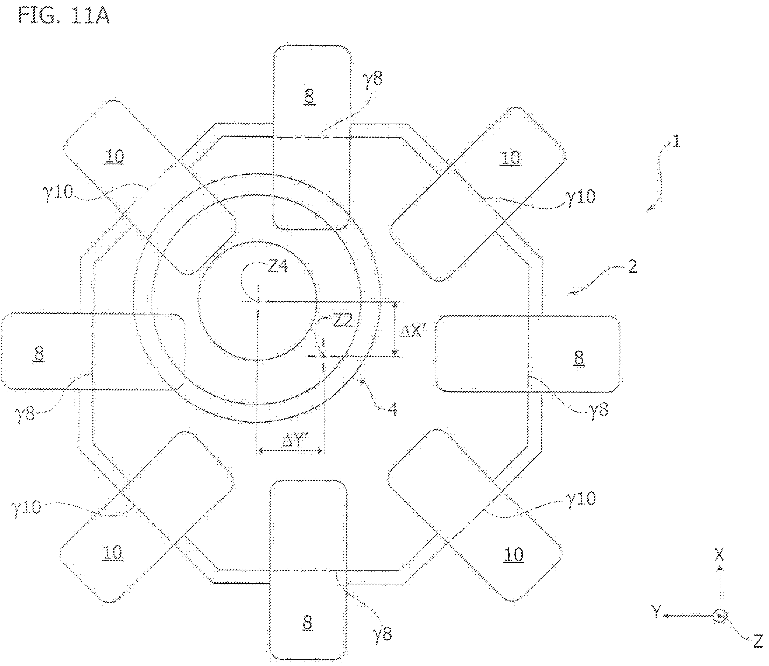

With reference to Figures 11 and 11A, the frame 103 is moved in the vertical direction Z reducing its height and bringing it up to the frame 102.

This facilitates entry of the pin 4 into the orifice O of the receiving element 2, and entry of the pin 4' into the orifice O of the further receiving element 2.

In this regard, the presence of a double ring of rollers, i.e., the ring 8 and the ring 10, facilitates the operations of positioning, ruling out the risk of any sticking. In fact, with reference to Figure 11, the tapered portion 14 can easily bear upon the rollers of the first ring 8 and/or the rollers of the second ring 10 according to the longitudinal and transverse deviations, causing the frame 103 to shift in the longitudinal direction and/or in the transverse direction to nullify the deviations ΔX and ΔY as the vertical movement of descent of the frame 103 proceeds.

The deviations ΔX', ΔY', which may be seen in Figure 11A, are of a small amount as compared the deviations ΔX and ΔY in so far as the pin 4 is guided by a roller 10 and/or by a roller 8 towards the position of alignment between the axes Z2 and Z4.

According to the invention, the rollers of the first ring 8 are configured for providing the final longitudinal and transverse positioning, and if need be for guiding the pin 4 during the transient of release of the frame 103, whereas the rollers of the ring 10, which are radially set further back, are configured only for facilitating the operations of centring of the pin 4 during the transient of release, but do not intervene in the final positioning in so far as they are radially set further back. In other words, during the transient both of the rings of rollers may be active for facilitating as much as possible centring of the pin 4 in the orifice O, whereas in the final coupling condition of the pin 4 in the orifice O just the rollers 8 intervene (or rather interact).

Precisely for this reason, the embodiment represented the figures is to be deemed preferred, where the rollers 8 (four in number) are aligned in pairs in the longitudinal and transverse directions, whereas the rollers 10 are aligned along the directrices at 45° with respect to the transverse and longitudinal directions so as to function as further guides in the case of recovery of deviations ΔX, ΔY with components of the same order of magnitude in both directions (X and Y).

If the handling device/vehicle V is provided with the aforementioned release device, when the frame 103 is released on the frame 102 and the handling device V is progressively relieved of the weight of the frame 103, it is possible to enable a relative movement, in a transverse direction and/or in a longitudinal direction, between the frame 103 and the handling device V, which assists recovery of the deviations ΔX and ΔY.

Also the ensemble formed by the receiving element 2 and the pin 4 set at the interface between the frame 103 and the vehicle V assists release of the frame 103 and recovery of the deviations ΔX and ΔY, in any case maintaining a minimal condition of (mobile) constraint between the vehicle V and the frame 103 as release proceeds so as to prevent any sudden movements of the frame 103 with respect to the vehicle (which become more likely if a release device is provided).

Quite simply, contrary to what occurs at the interface between the frame 103 and the frame 102, as the frame 103 passes from being supported by the vehicle V to being supported by the frame 102, the pin 4 on the vehicle V progressively releases from the receiving element 2 on the frame 103, being guided without any sticking by the two rings of rollers 8, 10.

The final coupling condition may be seen in Figure 12, where it may be noted how, at the end of the relative movement between the tapered portion 14 and the rollers 8, 10 that has led to alignment of the axes Z2, Z4, it is the cylindrical portion 16 that lies between the rollers 8, 10 and bears upon them, with the rollers 8 that bear upon the surface of the portion 16 in diametrally opposite positions (net of any inevitable fitting play) along the axis X and along the axis Y, thus enabling extremely precise positioning of the frame 103 with respect to the frame 102 both in the transverse direction and in the longitudinal direction. In particular, the pair of rollers 8 aligned in the direction X positions the frame 103 longitudinally, whereas the pair of rollers 8 aligned in the direction Y positions the frame 103 transversely.

Simultaneously with the sequence of Figures 10 to 12, the same sequence of operations applies, with the necessary changes, also to the pin 4' and the corresponding receiving element 2, with the sole exception due to the fact that in this case the final condition of coupling between the pin 4' and the receiving element 2 does not envisage contact with the rollers 8 in the longitudinal direction on account of the flattened areas F so as to prevent conditions of statically indeterminate longitudinal constraint for the frame 103 with respect to the frame 102. In a transverse direction, instead, there is no static indeterminacy in the constraint since the pins 4 and 4' are located at opposite ends of the frame 103 so that it is necessary to fix the position of one end and the other end in the transverse direction.

It should moreover be noted that in the final coupling condition the receiving element 2 and the pin 4 do not support any weight in the vertical direction since the supporting and vertical-positioning function is entrusted solely to the supports 108.

Once the process of release is concluded with the condition illustrated in Figure 12, the handling device V can resume its movement from the lay-by area P and abandon the station 100 through the exit section OUT.

In the reverse operation, i.e., that of picking up of the frame 103 from the frame 102 by the vehicle V, the latter enters through the entry section IN, positions itself in the lay-by area P underneath the frame 103, and progressively raises its top surface in order to take up progressively the weight of the frame 103.

In this case, the presence of the release platform and of the aforesaid positioning system 1 between the frame 103 and the vehicle V enables compensation in the opposite direction of the differences of positioning between the device V and the frame 103 when the latter is supported by the frame 102. As always, it is the vehicle V that enters the station 100 with a non-optimal position with respect to that of the frame 103 (which is here no longer a target position, but an actual position): if in the release operation the frame 103 has to compensate for the deviations with respect to a target position on the frame 102, in the picking-up operation the frame 103 has to compensate for the deviations with respect to the position of coupling to the vehicle V, in particular with respect to the position of coupling to the pin 4 on the vehicle V.

In this regard, now it is the pin 4 on the vehicle V that progressively engages the receiving element 2 on the frame 103, while the pins 4 and 4' progressively release from the receiving elements 2 and 2' on the frame 102. In this step, it is the pin 4 on the vehicle V with the respective receiving element 2 on the frame 103 that functions as centring element, while the pins 4 and 4' at opposite ends of the frame 103 remain fundamentally passive or practically passive.

Once again, in the case where it is present, the release device on the vehicle V further assists the relative movements between the frame 103 and the vehicle V, this time, however, being in a more burdensome condition since the load on the vehicle V increases as the operation proceeds.

Thanks to the positioning system 1 according to the invention, it is hence possible to reconcile the needs and performance of positioning of objects that are even very different from one another, in a completely automatic and purely mechanical way, without any need for interventions other than simple actions of picking-up and release of the frame 103 itself. It hence becomes possible to exploit the extreme flexibility afforded by handling devices, such as AGVs, within a plant: the paths of flow of the frames 103 can be established with greater flexibility as compared to what is obtained with pit-type movement and handling equipment, and can benefit from a greater flexibility in the layout of the industrial plant.

The shape of the pin 4 and provision of a double ring of rollers, where one of the two rings performs only functions of lead-in/centring of the pin (the ring 10) and the other ring performs both the lead-in function and the function of position referencing (the ring 8), ensures that, whatever the misalignment between the axes Z4 and Z2, this can be recovered and nullified without sticking of any sort, and without any need for external corrections, in a completely automatic and purely mechanical way.

On the other hand, it should be noted, the configuration of pins/receiving elements here illustrated can be combined in any way according to the needs. For instance, the receiving elements fixed to the frame 102 and aimed at enabling coupling with the pins 4 and 4' on the frame 103, can be shifted on the frame 103 in homologous positions, and the pins 4, 4' can consequently be mounted on the frame 102. Also the receiving element on the frame 103 in a central position for coupling with the pin 4 on the vehicle V may be installed on the vehicle V, and the pin may be accordingly repositioned on the frame 103. Hybrid schemes may also be used, in which the frame 103 has the pin 4 and the receiving element 2 designed for coupling with the pin 4' on the frame 102, or vice versa.

This in practice opens to the possibility of creating industrial installations in which movement of the frames 103 may be performed on floors without pits or embedded structures for housing guide equipment, thus ideally making it possible to implement an industrial installation in any building that is provided with a roof, including a prefabricated building not expressly conceived for housing an industrial assembly installation.

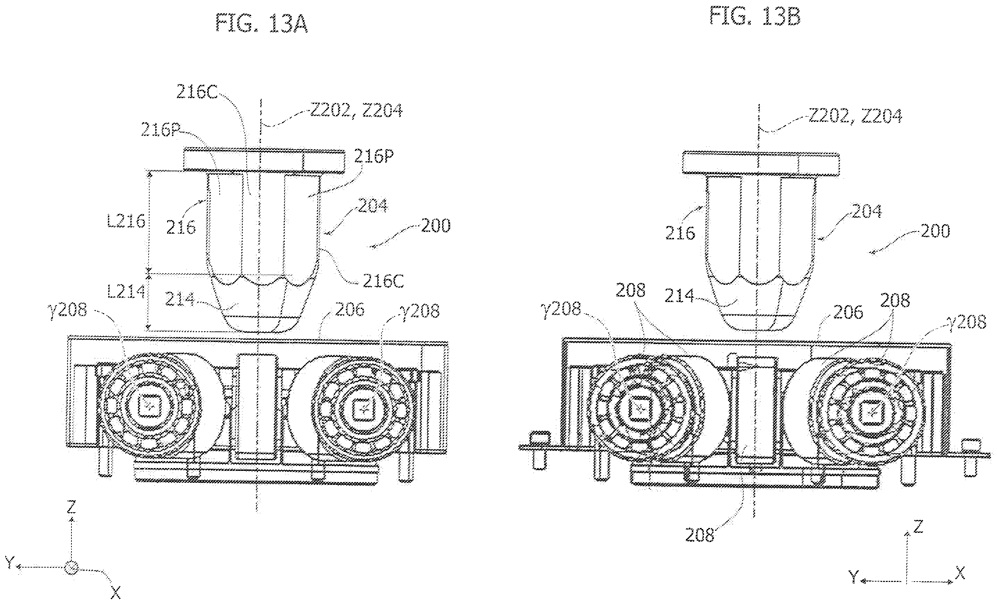

The reference number 200 in Figures 13A, 13B designates as a whole a system for positioning a mobile frame with respect to a fixed frame according to a further embodiment of the invention. The system 200 comprises a receiving element 202 configured for connection to one between the mobile frame 103 and the fixed frame 102, and a pin 204 configured for connection to the other between the mobile frame 103 and the fixed frame 102. The pin 204 is configured for coupling within the receiving element 202 in a engagement direction defined by a main axis Z202 of the receiving element 200.

In particular, the axis Z202 is a longitudinal axis of an orifice O of the receiving element 202, where the term "longitudinal" is here to be understood only with reference to the receiving element 202 and not with reference to the cartesian system X-Y-Z that is represented in the figures, which is consistent in all the figures and - as has been said - applies to the processing station 100. With reference to Figures 13A, 13B, 14, and 15, the receiving element 202 comprises a single ring of rollers 208 centred around the axis Z202.

The rollers of the ring 208 have an axis of rotation γ208, where - by comparison with the receiving element 2 - the axes of rotation γ208 lie on a circumference C208*, which is homologous with respect to the circumference C8, and belong to planes orthogonal to the main axis Z202, and preferably belong to one and the same plane XY orthogonal to the axis Z202.

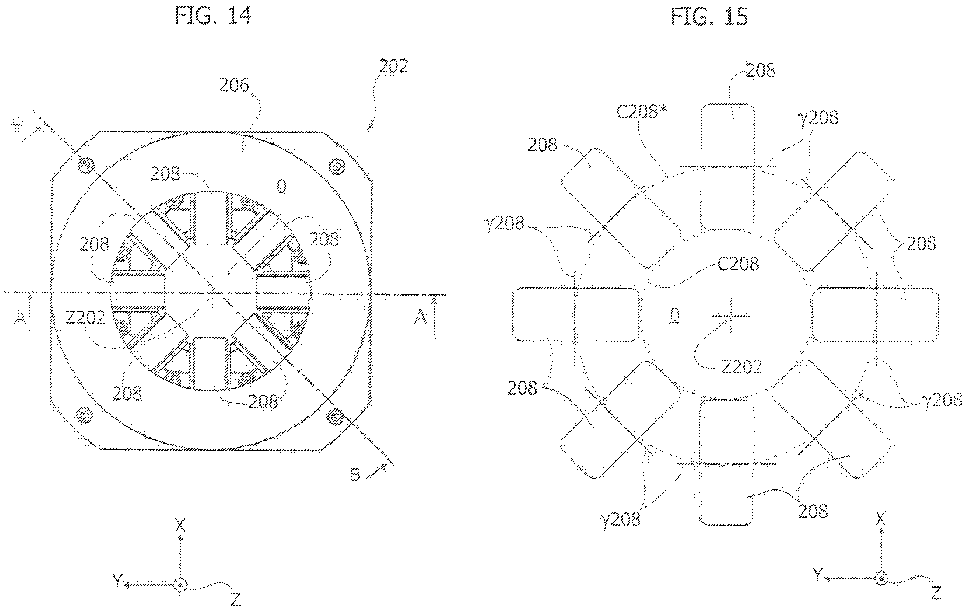

The rollers 208 come to define functionally the orifice O, as may be clearly seen in Figure 14. In this way, the orifice O has a pseudopolygonal (here pseudo-octagonal) shape that derives from the arrangement of the peripheral (rolling) surfaces of the rollers 208, in a position tangential to a circumference C208 centred on the axis Z2 and homologous with respect to the circumference C8.

Since the rollers 208 have the same diameter, their radial protrusion within the orifice O is constant: this is the main difference with respect to the receiving element 2.

In the preferred embodiment of the invention illustrated here, the ring of rollers comprises four first rollers 208 set at equal angular distances apart (hence at 90°, with a crosswise arrangement) and four second rollers 208 set at equal angular distances apart (hence at 90°, with a crosswise arrangement), where the arrangement of the first rollers is staggered by 45° with respect to the arrangement of the second rollers about the axis Z202.

In the above arrangement, as may be seen in Figure 4, the rollers 208 are in effect arranged in such a way that their respective axes γ208 - when prolonged - give rise to an octagonal shape, and moreover pseudo-octagonal is the shape defined in plan view by the envelope of the peripheral (rolling) surfaces of the rollers 208 that face one another to define the orifice O (which hence itself has the pseudo-octagonal shape, as already mentioned).

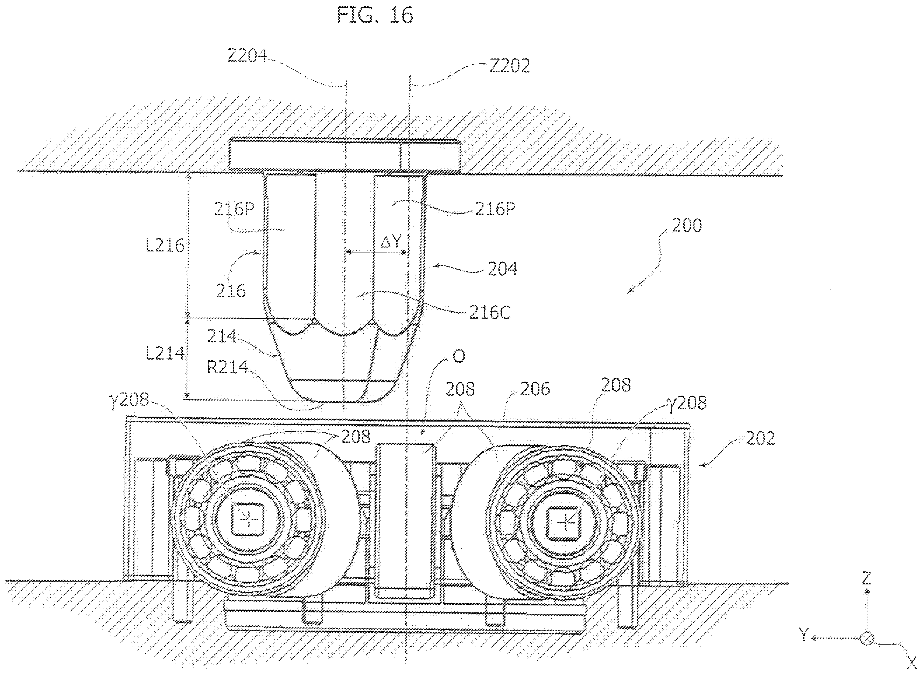

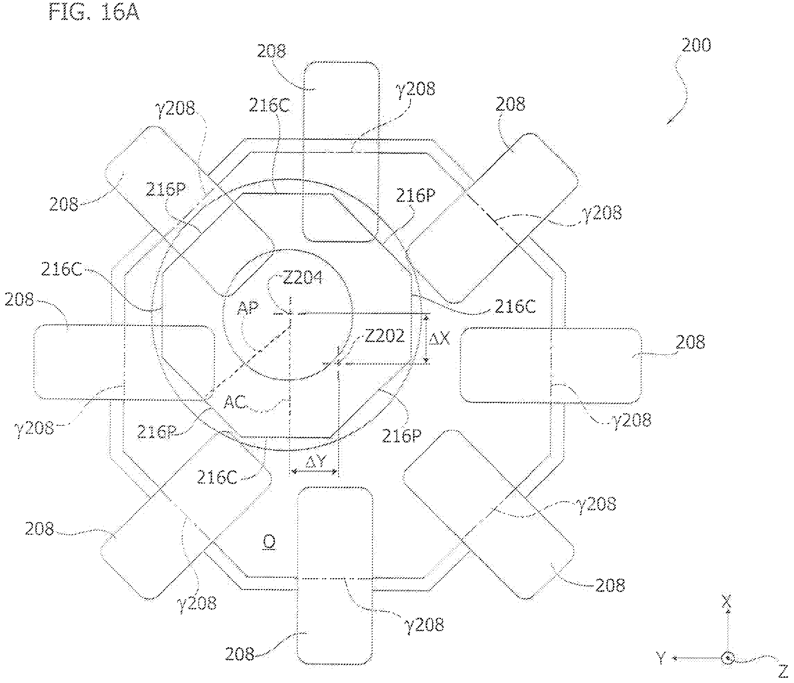

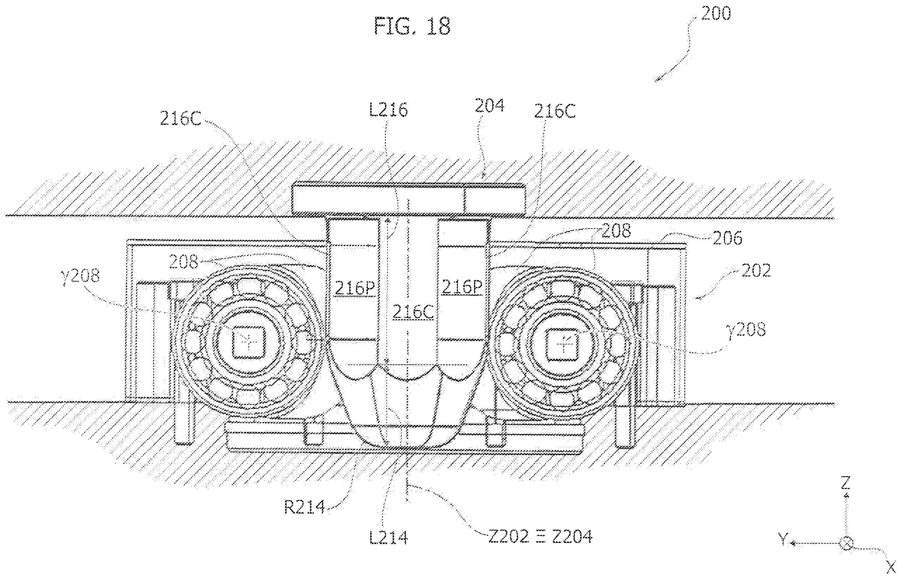

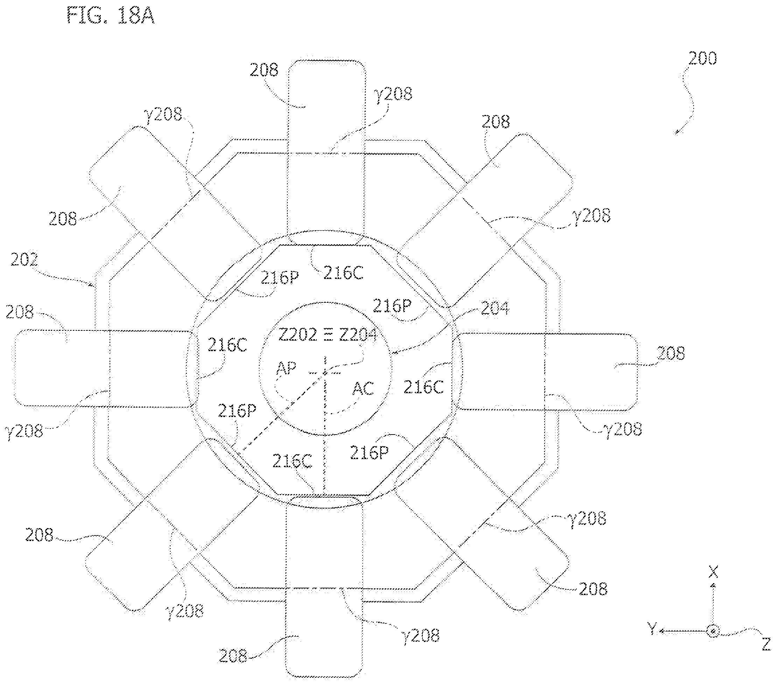

With reference to Figures 13A, 13B and to Figures 16, 17, 18, the pin 204 comprises a first, tapered, portion 214 and a second, prismatic, portion 216, which develop coaxially sharing a longitudinal axis Z204 of the pin (the term "longitudinal" is here understood with reference to just the pin, and not to the reference system XYZ of the figures). The tapered portion 214 preferably has a conical geometry that terminates at a first (free) end R214, and extends for an axial length L214 as far as the prismatic portion 216. The prismatic portion 216 has a polygonal cross section having a shape homologous with respect to the arrangement of the rollers 208. In the embodiment illustrated here, the portion 216 comprises four faces 216C orthogonal to one another and orthogonal in pairs with respect to the axis X and to the axis Y, and four faces 216P, which are also orthogonal to one another and orthogonal in pairs to the bisectrices of the quadrants of the plane XY. The faces 216C are hence arranged alternating with the faces 216P. The envelope of the faces 216C and 216P is an irregular octagonal shape in which (Figures 16A, 17A, 18A) the distance between the faces 216C and 216P varies about the axis Z204 according to the face considered. In particular, a radial distance AC associated to the faces 216C has a length greater than a radial distance AP associated to the faces 216P. In other words, the faces 216P have a radial protrusion smaller than the one that they would have in the case where they formed part of a regular octagonal shape, and in any case such that - with reference, in particular, to Figure 18A **-,** when the pin 204 is completely within the orifice, the faces 216P do not touch the peripheral surfaces of the rollers 208 facing them. The prismatic portion 216 develops for an axial extension L216, and the ratio L14/L16 is sized in such a way that, when the pin 4 is completely within the orifice O, the rollers 208 bear upon the cylindrical surface 16, slightly above the interface with the surface 14 (see Figure 12). As already noted in regard to the system 1, the ratio L214/L216 depends upon the degree of the positioning error that it is required to recover (as likewise upon the number of rollers 208). The dimension L216 depends upon the length necessary for engaging the rollers 208 and upon the overall height of the receiving element 202. The size of the rollers 208 depends upon the load to be sustained during introduction of the pin 204.

It is to be borne in mind that in alternative embodiments the tapered portion 14 may exhibit a different geometry that envisages a reduction in a diameter towards the end R14 of the pin 4. For instance, parabolic profiles or also circular profiles with a wide radius may be envisaged.

The pin element 204 is configured for being connected to the fixed frame or to the mobile frame at a second end H4 that is adjacent to the prismatic portion 216, whereas the end R214 constitutes the free end of the pin 204 configured for encountering, first, the orifice O and the rollers 208 in the engagement direction Z202.

Hence, it may be stated that the embodiments 1, 200 present the common characteristic of a receiving element 2, 202 that has at least one ring of rollers, which develops about a longitudinal axis Z2, Z202 and defines the orifice O, and where a distance (in the radial direction) between peripheral surfaces of the rollers of the at least one ring and the pin 4, 204 when the latter is received (in particular completely received) in the orifice O varies around the main axis Z2, Z202. In addition, in both embodiments 1, 200, when the pin 4, 204 is received (in particular, completely received) in the orifice O, there exists at least one area of contact between a roller of the at least one ring of rollers 8, 10 or 208 and the second portion 16 (cylindrical portion), 216 (prismatic portion) of the pin 4, 204.

In the case of the coupling system 1, the variation in the radial distance is due to the different radial protrusion of the rollers of the rings 8, 10 and in particular to the tangency of the rolling surfaces thereof to concentric circumferences C8, C10 that have a different diameter. Hence, the at least one area of contact referred to above will correspond to an area of contact between a roller of the ring 8 and the portion 16. Instead, in the case of the coupling system 200, the variation is due to the different radial protrusion of the surfaces 216P, 216C with respect to the axis Z204, and in particular to the difference of length between the distance AP and the distance AC. Hence, the at least one area of contact will correspond to an area of contact between a face 216C and a roller 208 facing it.

The system 200 is able to equip a station 100, or may be used in all the applications referred to in the corresponding description (including non-automotive applications), in a way similar to what has been described for the system 1. For the purposes of completeness of the present description, with the aid of Figures 16 to 18 an operating sequence that involves the positioning system 200 will now be described.

With reference to Figure 16 and Figure 16A, on account of the (relatively) poor precision of positioning of the handling device/vehicle V with respect to the frame 102, even if positioning of the frame 103 on the handling device/vehicle V presents high repeatability, the frame 103 arrives with the pin 204 misaligned with respect to the engagement direction Z202 of the corresponding receiving element. Without the positioning device 200, release of the frame 103 on the frame 102 would occur with the former in a position completely out of tolerance along the transverse axis Y and along the longitudinal axis X (along Z the reference is in any case provided by the supports 108, but this is clearly not sufficient). As regards the pin 4', this can equip the frame 103 (coupled to the receiving element 2) also in the case where the first pin is a pin 204, but it is possible to envisage a pin 204' coupled to the receiving element 202, where the faces 216C aligned along the axis X and orthogonal thereto are further set back, for example until there is a radial distance from the axis Z204 equal to the distance AP or even shorter.

In this regard, Figures 16 and 16A illustrate a possible starting condition of the operations of release of the mobile frame 103 on the fixed frame 102, in particular a condition in which the handling device V has reached the lay-by area P with a positioning such that the axis Z204 of the pin 204 presents a longitudinal deviation ΔX and a transverse deviation ΔY with respect to the axis Z2 of the receiving element 2 (even though not illustrated for reasons of economy, a very similar situation arises also for the pin 4', 204': the deviations may, of course, be different but the situation is conceptually the same).

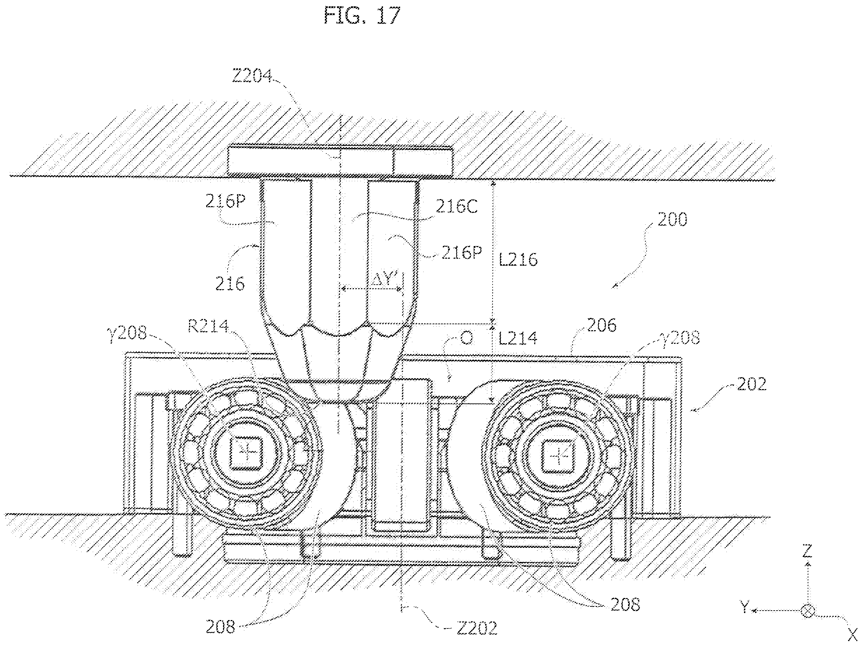

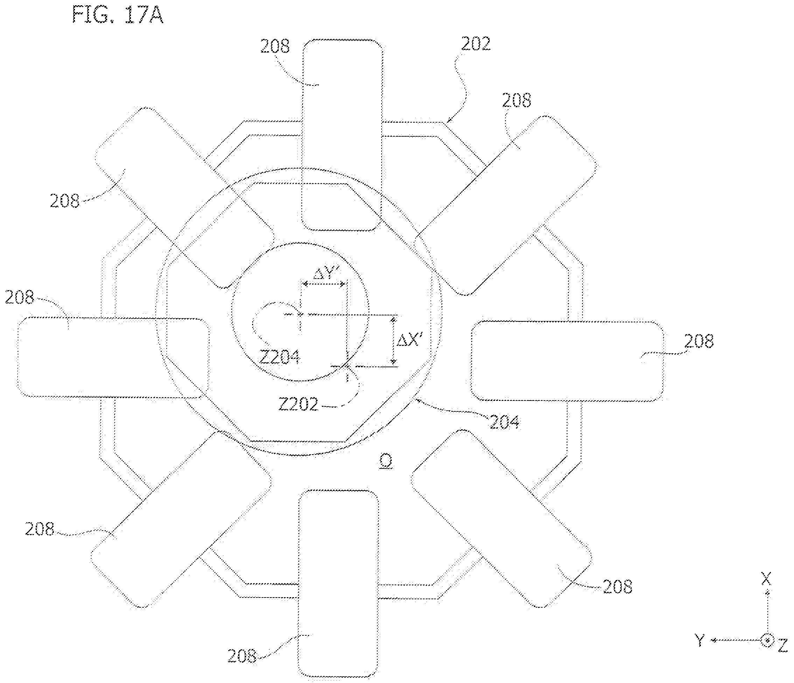

With reference to Figures 17 and 17A, the frame 103 is moved in the vertical direction Z reducing its height and bringing it up to the frame 102.

This facilitates entry of the pin 204 into the orifice O of the receiving element 202, and entry of the pin 4'/204' into the orifice O of the further receiving element 2/202.

In this regard, the presence of the prismatic portion 216, in combination with the tapered portion 214, facilitates the operations of positioning, ruling out any risk of sticking. In fact, with reference to Figure 17, the tapered portion 214 may conveniently bear upon the rollers 208 - both the ones facing the surfaces 216P and the ones facing the surfaces 216C - according to the longitudinal and transverse deviations, causing the frame 103 to shift in the longitudinal direction and/or the transverse direction to nullify the deviations ΔX and ΔY as the vertical movement of descent of the frame 103 proceeds.

The deviations ΔX', ΔY', which may be seen in Figure 17A, are of a small amount as compared the deviations ΔX and ΔY in so far as the pin 204 is guided by one or more rollers 208 towards the position of alignment between the axes Z202 and Z204.

According to the invention, the faces 216C are configured for providing the final longitudinal and transverse positioning, and if need be for guiding the pin 204 during the transient of release of the frame 103, whereas the faces 216P, which are radially set further back, do not intervene in the final positioning in so far as they are not configured for contacting the rolling surfaces of the rollers 208 facing them.

In other words, during the transient both of the arrangements of rollers 208 may be active, both the arrangement with the rollers aligned in pair in the directions X and Y or the arrangement with the rollers aligned along the bisectrices of the quadrants of the plane X-Y, as well as the tapered portion 214, whereas in the final coupling condition of the pin 204 within the orifice O just the rollers facing the faces 216C (centring faces) intervene (or rather interact), and the faces 216P prevent - thanks to their position - any contact all around the axis Z202, which could otherwise generate sticking or interference.

If the handling device/vehicle V is provided with the aforementioned release device, when the frame 103 is released on the frame 102 and the handling device V is progressively relieved of the weight of the frame 103, it is possible to enable a relative movement, in a transverse direction and/or in a longitudinal direction, between the frame 103 and the handling device V, which assists recovery of the deviations ΔX and ΔY.

Also the ensemble formed by the receiving element 202 and the pin 204 set at the interface between the frame 103 and the vehicle V assists release of the frame 103 and recovery of the deviations ΔX and ΔY, in any case maintaining a minimal condition of (mobile) constraint between the vehicle V and the frame 103 as release proceeds so as to prevent any sudden movements of the frame 103 with respect to the vehicle (which become more likely if a release device is provided).

Quite simply, contrary to what occurs at the interface between the frame 103 and the frame 102, as the frame 103 passes from being supported by the vehicle V to being supported by the frame 102, the pin 204 on the vehicle V progressively releases from the receiving element 202 on the frame 103, being guided without any sticking by the rings of rollers 208.

The final coupling condition may be seen in Figures 18 and 18A, where it may be noted how, at the end of the relative movement between the tapered portion 214 and the rollers 208 that has led to alignment of the axes Z2, Z4, it is the cylindrical portion 216 that lies between the rollers 208, with the faces 216P that bear upon them in diametrally opposite positions (net of any inevitable fitting play) along the axis X and along the axis Y, thus enabling extremely precise positioning of the frame 103 with respect to the frame 102 both in the transverse direction and in the longitudinal direction. In particular, the pair of rollers 208 aligned in the direction X positions the frame 103 longitudinally, whereas the pair of rollers 208 aligned in the direction Y positions the frame 103 transversely.

Simultaneously with the sequence of Figures 10 to 12, the same sequence of operations applies, with the necessary changes, also to the pin 4'/204' and the corresponding receiving element 2/202, with the sole exception due to the fact that in this case the final condition of coupling between the pin 4'/204' and the receiving element 2/202 does not envisage contact between the pin 4'/204' and the rollers 8, 208 in the longitudinal direction on account of the flattened areas F or of the faces set further back so as to prevent conditions of statically indeterminate longitudinal constraint for the frame 103 with respect to the frame 102. In a transverse direction, instead, there is no static indeterminacy in the constraint since the pins 204 and 4'/204' are located at opposite ends of the frame 103 so that it is necessary to fix the position of one end and the other end in the transverse direction.

It should moreover be noted that in the final coupling condition the receiving element 202 and the pin 204 do not support any weight in the vertical direction since the supporting and vertical-positioning function is entrusted solely to the supports 108.

Once the process of release is concluded with the condition illustrated in Figure 18, the handling device V can resume its movement from the lay-by area P and abandon the station 100 through the exit section OUT.

In the reverse operation, i.e., that of picking up of the frame 103 from the frame 102 by the vehicle V, the latter enters through the entry section IN, positions itself in the lay-by area P underneath the frame 103, and progressively raises its top surface in order to take up progressively the weight of the frame 103.

In this case, the presence of the release platform and of the aforesaid positioning system 200 between the frame 103 and the vehicle V enables compensation in the opposite direction of the differences of positioning between the device V and the frame 103 when the latter is supported by the frame 102. As always, it is the vehicle V that enters the station 100 with a non-optimal position with respect to that of the frame 103 (which is here no longer a target position, but an actual position): if in the release operation the frame 103 has to compensate for the deviations with respect to a target position on the frame 102, in the picking-up operation the frame 103 has to compensate for the deviations with respect to the position of coupling to the vehicle V, in particular with respect to the position of coupling to the pin 204 on the vehicle V.

In this regard, now it is the pin 204 on the vehicle V that progressively engages the receiving element 202 on the frame 103, while the pins 204 and 4'/204' progressively release from the receiving elements 2 and 2'/202 on the frame 102. In this step, it is the pin 204 on the vehicle V with the respective receiving element 202 on the frame 103 that functions as centring element, while the pins 204 and 4'/204' at opposite ends of the frame 103 remain fundamentally passive or practically passive.

Once again, in the case where it is present, the release device on the vehicle V further assists the relative movements between the frame 103 and the vehicle V, this time, however, being in a more burdensome condition since the load on the vehicle V increases as the operation proceeds.

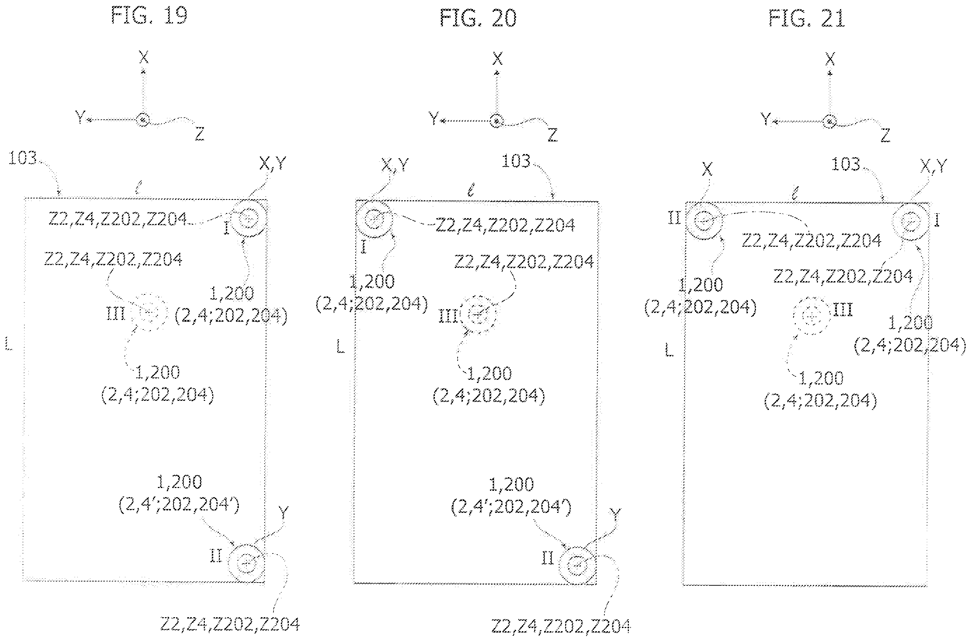

Finally, with reference to Figures 19, 20, 21, these illustrate three possible arrangements of the coupling systems 1, 200 on the mobile frame 103 in the light of the considerations set forth in the foregoing description.

As has been seen, the need is to prevent statically indeterminate constraint schemes: this results in constraining globally three degrees of freedom in the plane XY in at least two points (three at the most). In the solution already described, which corresponds to the scheme represented in Figure 19, two positioning systems according to the invention are aligned along a single directrix parallel to a long side L of the frame 103, where a first positioning system 1, 200 (also identified by the Roman numeral I) imposes the position reference along the co-ordinates X and Y at what in Figure 19 is the right-hand top corner (indicated by the combined reference X, Y) and a second positioning system 1, 200 (identified by the Roman numeral II) imposes the position reference just in the direction Y (once again as represented by the reference Y). Hence, the first positioning system constrains two degrees of freedom, whereas the second positioning system constrains just one degree of freedom (the positioning system represented with a dashed outline identified by the Roman numeral III is the one at the interface with the handling device V).

According to the scheme of Figure 20, the distribution of the constraints on the degrees of freedom is the same (two and one, respectively), but in this case the positioning system I, which blocks two degrees of freedom, is set at the opposite end of a short side l as compared to the case of Figure 19, with the same arrangement as in Figure 19 of the second positioning device II along the side l, in an opposite end position.

Finally, according to the scheme of Figure 21 the positioning systems I, II are arranged aligned along an axis parallel to a short side l. In this case, the distribution of the constrained degrees of freedom is the same (two and one), but the system II imposes the position reference along the axis X.

Of course, the details of construction and the embodiments may vary widely with respect to what has been described and illustrated herein, without thereby departing from the scope of the present invention as defined by the annexed claims.

## Claims

1. A receiving element (2) for a positioning system (1) of a mobile frame (103) relative to a fixed frame (102), the receiving element (2) comprising:
- an orifice (O) having a main axis (Z2) defining an engagement direction,
- a first ring of rollers (8) and a second ring of rollers (10), each of the rollers of the first ring (8) and of the second ring (10) having axis of rotation (γ8, γ10) belonging to a plane orthogonal to said main axis (Z2), the first ring of rollers (8) and the second ring of rollers (10) defining said orifice (O), and
the receiving element being **characterized in that**:
- the peripheral surfaces of the rollers (8) of the first ring are arranged tangential to a first circumference (C8) having a centre on said main axis (Z2),
- the peripheral surfaces of the rollers of the second ring (10) are arranged tangential to a second circumference (C10) having a centre on said main axis (Z2), and
- the diameter of the first circumference (C8) is lower than the diameter of the second circumference (C10).

2. The receiving element (2) according to claim 1, wherein the first ring comprises four rollers (8) spaced at equal angular distances apart, and the second ring (10) comprises four rollers spaced at equal angular distances apart, wherein each roller of the second ring (10) is staggered, preferably by 45°, relative to an adjacent roller (8) of the second ring.

3. A system (1) for positioning a mobile frame (103), particularly a frame for supporting motor-vehicle body shells, with respect to a fixed frame (102), comprising:
- a receiving element (2) accprdomg tp amy of claims 1 or 2 configured for connection to one of said mobile frame (103) and fixed frame (102),
- a pin (4, 4') configured for connection to the other of said mobile frame (103) and fixed frame (102), and configured for coupling into said receiving element (2) along the engagement direction (Z2),
wherein:
- the pin (4, 4') comprises a first end (H4) and a second end (R14), the first end (H4) being configured for connection to the other of said mobile frame (103) and fixed frame (102), and the second end (R14) being a free end, the pin (4, 4') furthermore comprising a first tapered portion (14; 214) extending in correspondence of said second end (R14) and a second portion (16),
- wherein when the pin (4, 4') is received into said orifice (O) a distance between peripheral surfaces of the rollers of said first ring of rollers (8) and second ring of rollers (10) and said second portion (16; 216) of the pin (4, 4') is variable around said main axis (Z2),
the system (1) being **characterized in that**:
- the pin (4, 4') comprises a cylindrical portion (16) extending in correspondence of said first end (H4).

4. The positioning system (1) according to claim 3, wherein when the pin (4, 4') is received into said orifice (O) at least a contact area exist between a roller of said at least one ring of rollers (8, 10) and the second portion of said pin (4, 4').

5. The positioning system (1) according to claim 4, wherein the rollers (8) of the first ring are arranged alternated to the rollers (10) of the second ring.

6. The positioning system (1) according to claim 5, wherein the axes of rotation (γ8) of the rollers of the first ring (8) and the axes of rotation (γ10) of the rollers of the second ring (10) belong to the same plane orthogonal to the main axis (Z2).

7. The positioning system (1) according to claim 3 or claim 6, wherein the rollers of the first ring (8) and the rollers of the second ring (10) having axes of rotation (γ8, γ10) tangential to a single circumference having a centre on the main axis (Z2), and wherein the diameter of the rollers of the first ring (8) is higher than the diameter of the rollers of the second ring (10).

8. The positioning system (1) according to claim 3 or claim 6, wherein the rollers of the first ring (8) have axes of rotation (γ8) tangential to a third circumference (C8*) having a centre on the main axis (Z2), and the rollers of the second ring (10) have axes of rotation (γ10) tangential to a fourth circumference (C10*), and wherein the third circumference (C8*) has a lower diameter than the fourth circumference (C10*).

9. The positioning system (1) according to any of claims 3 and 5 to 8, wherein the first ring comprises four rollers (8) spaced at equal angular distances apart, and the second ring (10) comprises four rollers spaced at equal angular distances apart, wherein each roller of the second ring (10) is staggered, preferably by 45°, relative to an adjacent roller (8) of the first ring.

10. The positioning system (1) according to claim 9, wherein each roller of the second ring (10) is staggered by 45° with respect to an adjacent roller (8) of the first ring.

11. A processing station (100) for motor-vehicle body shells, comprising:
- a mobile frame (103) for supporting of a motor-vehicle body shell,
- a fixed frame (102) particularly fixed to the floor, configured for supporting said mobile frame (103),
- at least one positioning system (1) for the mobile frame (103) relative to the fixed frame (102) according to any of claims 3 to 10,
wherein:
- at least one receiving element (2) is connected to one of said mobile frame (103) and fixed frame (102), so that the engagement direction (Z2) is aligned to a corresponding vertical direction (Z) of the station (100), and
- at least one corresponding pin (4, 4') is connected to the other of said mobile frame (102) and fixed frame (103) and is configured for coupling with said receiving element (2).

12. The processing station (100) according to claim 11 further comprising a handling device (V) configured for, selectively, the release of the mobile frame (103) on the fixed frame (102) and the pick-up of the mobile frame (103) from the fixed frame (102),
wherein the handling device (V) is configured for coupling the pin (4, 4'; 204, 204') into the corresponding receiving element (2; 202) upon releasing the mobile frame (103) on the fixed frame (102), and for extracting the pin (4, 4'; 204, 204') from the corresponding receiving element (2; 202) upon picking-up the mobile frame (103) from the fixed frame (102).

13. The processing station (100) according to claim 12, wherein the fixed frame (102) comprises two lateral banks (104, 106) adapted to support the mobile frame (103) and defining an entry section (IN), a lay-by area (P), and an exit section (OUT) of the processing station (100), wherein:
- upon releasing the mobile frame (103) on the fixed frame (102) the handling device (V) is configured for traversing the entry section (IN) supporting the mobile frame (103), releasing the mobile frame (103) on the fixed frame (102) in correspondence of the lay-by area (P), and traversing the exit section (OUT),
- upon picking of the mobile frame (103) from the fixed frame (102) the handling device (V) is configured for traversing the entry section (IN), picking-up the mobile frame (103) from the fixed frame (102) in correspondence of the lay-by area (P), and traversing the exit section (OUT) bearing the mobile frame (103).

14. The processing station (100) according to any of claims 11 to 13, wherein the receiving element (2; 202) is fastened to the fixed frame (102), and the pin (4, 4'; 204, 204') is fastened to the mobile frame (103).

15. The processing station (100) according to any of claims 11 to 14, wherein the first ring comprises four rollers (8) spaced at equal angular distances apart, and the second ring (10) comprises four rollers spaced at equal angular distances apart, wherein each roller of the second ring (10) is staggered, preferably by 45°, relative to an adjacent roller (8) of the first ring,
and wherein
- the four rollers (8) of the first ring comprise a first pair of rollers (8) aligned along a longitudinal direction (X) of the fixed frame (102), and a second pair of rollers (8) aligned along a transverse direction of the fixed frame (102),
- the cylindrical portion (16) of the pin (4) has a diameter which is substantially coincident to the diameter of the first circumference (C8), so that the rollers (8) of the first pair are configured to provide a positioning reference along the longitudinal direction (X), and the rollers (8) of the second pair are configured to provide a positioning reference along the transversal direction (Y).

16. The processing station (100) according to claim 14 or claim 15, wherein:
- the fixed frame (102) comprises a second receiving element wherein the first ring comprises four rollers (8) spaced at equal angular distances apart and the second ring (10) comprises four rollers spaced at equal angular distances apart, wherein each roller of the second ring (10) is staggered, preferably by 45°, relative to an adjacent roller (8) of the first ring, and wherein
- the four rollers (8) of the first ring comprise a first pair of rollers (8) aligned along a longitudinal direction (X) of the fixed frame (102), and the second pair of rollers (8) aligned along a transversal direction (Y) of the fixed frame (102),
- the mobile frame (103) comprises a second pin (4') configured for engaging into the orifice of the second receiving element (2), said second pin (4') comprises a pair of flattenings (F) in correspondence at least of said cylindrical portion (16) and diametrically opposite positioned and aligned along same longitudinal direction (X).

17. The processing station (100) according to claim 16, wherein the receiving elements (2, 2) are arranged on the same lateral bank (104) of the fixed frame (102), in a longitudinally spaced position.

18. The processing station (100) according to claim 12 wherein said handling device comprises an automated guided vehicle, particularly an AGV (Automated Guided Vehicle).

19. The processing station (100) according to claim 18, wherein the automated guided vehicle has a top portion configured for translating vertically, wherein in correspondence of said top portion a pin is provided (4, 4') of a positioning system (1,) according to claim 1 configured for engaging into a corresponding receiving element (2) fastened to the mobile frame (103).

20. The processing station (100) according to claim 12 or claim 18, comprising a disengagement device at the interface between said handling device (V) and said mobile frame (103), the disengagement device (FL) being configured for enabling a relative motion between said mobile frame and said handling device (V) in correspondence of said interface.

21. The processing station (100) according to claim 20, wherein said disengagement device (FL) comprises one or more of the following:
- one or more rolling elements (BB),
- one or more sectors or elements of low friction material.

22. The processing station (100) according to claim 19, wherein said Automated Guided Vehicle comprising a disengagement device (FL) configured for enabling a relative motion between the top surface thereof and said mobile frame (103) upon picking-up or releasing of the same from or onto the fixed frame (102).

23. A method for releasing a mobile frame (103) in correspondence of a processing station (100) according to claim 11, the method comprising:
- positioning, by means of a handling device (V), the mobile frame (103) relative to the fixed frame (102) by arranging each pin (4, 4'; 204, 204') in correspondence of the orifice (o) of the respective receiving element (2; 202),
- displacing, by means of the handling device (V), the mobile frame (103) relative to the fixed frame (102) along the engagement direction (Z2; Z202) so as to introduce the tapered portion (14; 214) of each pin (4; 204) first, then the cylindrical portion (16; 2016), into the corresponding orifice (O),
wherein said displacing moves on until the mobile frame (103) stops onto supports (108) carried by said fixed frame (102),
wherein, during said displacing, the first tapered portion (14; 214) is configured to interact with one or more rollers of said at least one ring (8, 10; 208) to reach an alignment condition between an axis (Z4; Z204) of the pin and the main axis (Z2; Z202) of the receiving element 2; 202), and
wherein, during said displacing, the cylindrical portion (16; 216) of the pin (4; 204) is configured to abut on a selection of rollers (8) of said at least one ring of rollers (8, 10; 208) thereby establishing the position of the mobile frame (103) relative to the fixed frame (102) along a longitudinal direction (X) and along a transversal direction (Y).
and further wherein:
- the second portion of the pin (4) of the positioning system (1) is a cylindrical portion (16) extending in correspondence of said first end (H4),
- the receiving element (2) comprises a first ring of rollers (8) and a second ring of rollers (10), each of the rollers of the first ring (8) and of the second ring (10) has an axis of rotation (γ8, γ10) belonging to a plane orthogonal to said main axis (Z2), the first ring of rollers (8) and the second ring of rollers (10) defining said orifice (O),
- the peripheral surfaces of the rollers (8) of the first ring are arranged tangential to a first circumference (C8) with a centre on said main axis (Z2),
- the peripheral surfaces of the rollers of the second ring (10) are arranged tangential to a second circumference (C10) having a centre on said main axis (Z2), and
- the diameter of the first circumference (C8) is lower than the diameter of the second circumference (C10), and
wherein, during said displacing, the tapered portion (14) is configured to interact with one or more rollers of the first ring (8) and/or one or more rollers of the second ring (10) of the corresponding receiving element (2, 2) to reach an alignment condition between an axis (Z4) of the pin and the main axis (Z2) of the receiving element (2), and
wherein, during said displacing, the cylindrical portion (16) of the pin (4) is configured to abut on the rollers (8) of the first ring (8) thereby establishing the position of the mobile frame (103) relative to the fixed frame (102) along a longitudinal direction (X) and along a transversal direction (Y), said rollers of the first ring defining said selection of rollers.

24. The method according to claim 23, wherein the fixed frame (102) comprises two lateral banks (104, 106) configured to support a mobile frame (103) and defining an entry section (IN), a lay-by area (P), and an exit section (OUT), wherein:
- in said positioning, the handling device (V) traverses the entry section (IN) bearing the mobile frame (103), and positioning itself in correspondence of said lay-by area (P),
- in said moving, the handling device (V) releases the mobile frame (103) on the fixed frame (102) remaining in correspondence of the lay-by area (P).

25. The method according to claim 24, wherein furthermore the handling device (V) traverses the exit section (OUT) of the fixed frame (102) when the release of the mobile frame (103) on the fixed frame (102) is completed.

## Patentansprüche

1. Aufnahmeelement (2) für ein Positionierungssystem (1) eines mobilen Rahmens (103) relativ zu einem ortsfesten Rahmen (102), wobei das Aufnahmeelement (2) umfasst:
- eine Öffnung (O) mit einer Hauptachse (Z2), die eine Eingriffsrichtung definiert,
- einen ersten Rollenring (8) und einen zweiten Rollenring (10), wobei jede der Rollen des ersten Rings (8) und des zweiten Rings (10) eine Drehachse (γ8, γ10) hat, die zu einer zur Hauptachse (Z2) orthogonalen Ebene gehört, wobei der erste Rollenring (8) und der zweite Rollenring (10) die Öffnung (O) definieren, und
wobei das Aufnahmeelement **dadurch gekennzeichnet ist, dass**:
- die Umfangsflächen der Rollen (8) des ersten Rings tangential zu einem ersten Umfang (C8) angeordnet sind, der einen Mittelpunkt auf der Hauptachse (Z2) aufweist,
- die Umfangsflächen der Rollen (10) des zweiten Rings tangential zu einem zweiten Umfang (C10) angeordnet sind, der einen Mittelpunkt auf der Hauptachse (Z2) aufweist, und
- der Durchmesser des ersten Umfangs (C8) kleiner als der Durchmesser des zweiten Umfangs (C10) ist.

2. Aufnahmeelement (2) nach Anspruch 1, wobei der erste Ring vier Rollen (8) umfasst, die mit gleichen Winkelabständen beabstandet sind, und der zweite Ring (10) vier Rollen umfasst, die mit gleichen Winkelabständen beabstandet sind, wobei jede Rolle des zweiten Rings (10) gegenüber einer benachbarten Rolle (8) des zweiten Rings versetzt ist, vorzugsweise um 45°.

3. System (1) zum Positionieren eines mobilen Rahmens (103), insbesondere eines Rahmens zum Tragen von Kraftfahrzeugrohbaukarosserien, gegenüber einem ortsfesten Rahmen (102), umfassend:
- ein Aufnahmeelement (2) nach einem der Ansprüche 1 oder 2, das zum Verbinden mit einem von dem mobilen Rahmen (103) und dem ortsfesten Rahmen (102) ausgestaltet ist,
- einen Zapfen (4, 4'), der zum Verbinden mit dem anderen von dem mobilen Rahmen (103) und dem ortsfesten Rahmen (102) ausgestaltet ist und zum Einkoppeln in das Aufnahmeelement (2) entlang der Eingriffsrichtung (Z2) ausgestaltet ist,
wobei:
- der Zapfen (4, 4') ein erstes Ende (H4) und ein zweites Ende (R14) umfasst, wobei das erste Ende (H4) zum Verbinden mit dem anderen von dem mobilen Rahmen (103) und dem ortsfesten Rahmen (102) ausgestaltet ist und das zweite Ende (R14) ein freies Ende ist, wobei der Zapfen (4, 4') ferner einen ersten konischen Abschnitt (14; 214), der sich in Entsprechung mit dem zweiten Ende (R14) erstreckt, und einen zweiten Abschnitt (16) umfasst,
- wobei, wenn der Zapfen (4, 4') in der Öffnung (O) aufgenommen ist, ein Abstand zwischen Umfangsflächen der Rollen des ersten Rollenrings (8) und des zweiten Rollenrings (10) und dem zweiten Abschnitt (16; 216) des Zapfens (4, 4') um die Hauptachse (Z2) variabel ist,
wobei das System (1) **dadurch gekennzeichnet ist, dass**:
- der Zapfen (4, 4') einen zylindrischen Abschnitt (16) umfasst, der sich in Entsprechung mit dem ersten Ende (H4) erstreckt.

4. Positionierungssystem (1) nach Anspruch 3, wobei, wenn der Zapfen (4, 4') in der Öffnung (O) aufgenommen ist, es zumindest eine Kontaktfläche zwischen einer Rolle des mindestens einen Rollenrings (8, 10) und dem zweiten Abschnitt des Zapfens (4, 4') gibt.

5. Positionierungssystem (1) nach Anspruch 4, wobei die Rollen (8) des ersten Rings abwechselnd mit den Rollen (10) des zweiten Rings angeordnet sind.

6. Positionierungssystem (1) nach Anspruch 5, wobei die Drehachsen (γ8) der Rollen des ersten Rings (8) und die Drehachsen (γ10) der Rollen des zweiten Rings (10) zu derselben zur Hauptachse (Z2) orthogonalen Ebene gehören.

7. Positionierungssystem (1) nach Anspruch 3 oder Anspruch 6, wobei die Rollen des ersten Rings (8) und die Rollen des zweiten Rings (10) Drehachsen (γ8, γ10) haben, die tangential zu einem einzigen Umfang mit einem Mittelpunkt auf der Hauptachse (Z2) sind, und wobei der Durchmesser der Rollen des ersten Rings (8) größer als der Durchmesser der Rollen des zweiten Rings (10) ist.

8. Positionierungssystem (1) nach Anspruch 3 oder Anspruch 6, wobei die Rollen des ersten Rings (8) Drehachsen (γ8) haben, die tangential zu einem dritten Umfang (C8*) mit einem Mittelpunkt auf der Hauptachse (Z2) sind, und die Rollen des zweiten Rings (10) Drehachsen (γ10) haben, die tangential zu einem vierten Umfang (C10*) sind, und wobei der dritte Umfang (C8*) einen kleineren Durchmesser als der vierte Umfang (C10*) hat.

9. Positionierungssystem (1) nach einem der Ansprüche 3 und 5 bis 8, wobei der erste Ring vier Rollen (8) umfasst, die mit gleichen Winkelabständen beabstandet sind, und der zweite Ring (10) vier Rollen umfasst, die mit gleichen Winkelabständen beabstandet sind, wobei jede Rolle des zweiten Rings (10) gegenüber einer benachbarten Rolle (8) des ersten Rings versetzt ist, vorzugsweise um 45°.

10. Positionierungssystem (1) nach Anspruch 9, wobei jede Rolle des zweiten Rings (10) gegenüber einer benachbarten Rolle (8) des ersten Rings um 45° versetzt ist.

11. Bearbeitungsstation (100) für Kraftfahrzeugrohbaukarosserien, umfassend:
- einen mobilen Rahmen (103) zum Tragen einer Kraftfahrzeugrohbaukarosserie,
- einen ortsfesten Rahmen (102), insbesondere am Boden befestigt, der zum Tragen des mobilen Rahmens (103) ausgestaltet ist,
- mindestens ein Positionierungssystem (1) für den mobilen Rahmen (103) relativ zum ortsfesten Rahmen (102) nach einem der Ansprüche 3 bis 10,
wobei:
- mindestens ein Aufnahmeelement (2) mit einem von dem mobilen Rahmen (103) und dem ortsfesten Rahmen (102) derart verbunden ist, dass die Eingriffsrichtung (Z2) mit einer entsprechenden vertikalen Richtung (Z) der Station (100) ausgerichtet ist, und
- mindestens ein entsprechender Zapfen (4, 4') mit dem anderen von dem mobilen Rahmen (102) und dem ortsfesten Rahmen (103) verbunden und zum Koppeln mit dem Aufnahmeelement (2) ausgestaltet ist.

12. Bearbeitungsstation (100) nach Anspruch 11, ferner umfassend eine Handhabungsvorrichtung (V), die dazu eingerichtet ist, selektiv den mobilen Rahmen (103) auf den ortsfesten Rahmen (102) abzugeben und den mobilen Rahmen (103) vom ortsfesten Rahmen (102) aufzunehmen,
wobei die Handhabungsvorrichtung (V) dazu eingerichtet ist, den Zapfen (4, 4'; 204, 204') beim Abgeben des mobilen Rahmens (103) auf den ortsfesten Rahmen (102) in das entsprechende Aufnahmeelement (2; 202) einzukoppeln und den Zapfen (4, 4'; 204, 204') beim Aufnehmen des mobilen Rahmens (103) vom ortsfesten Rahmen (102) aus dem entsprechenden Aufnahmeelement (2; 202) herauszuziehen.

13. Bearbeitungsstation (100) nach Anspruch 12, wobei der ortsfeste Rahmen (102) zwei seitliche Bänke (104, 106) umfasst, die geeignet sind, den mobilen Rahmen (103) zu tragen, und einen Eintrittsabschnitt (IN), einen Haltebereich (P) und einen Austrittsabschnitt (OUT) der Bearbeitungsstation (100) definieren, wobei:
- beim Abgeben des mobilen Rahmens (103) auf den ortsfesten Rahmen (102) die Handhabungsvorrichtung (V) dazu eingerichtet ist, den Eintrittsabschnitt (IN) den mobilen Rahmen (103) tragend zu durchlaufen, den mobilen Rahmen (103) auf den ortsfesten Rahmen (102) in Entsprechung mit dem Haltebereich (P) abzugeben und den Austrittsabschnitt (OUT) zu durchlaufen,
- beim Aufnehmen des mobilen Rahmens (103) von dem ortsfesten Rahmen (102) die Handhabungsvorrichtung (V) dazu eingerichtet ist, den Eintrittsabschnitt (IN) zu durchlaufen, den mobilen Rahmen (103) vom ortsfesten Rahmen (102) in Entsprechung mit dem Haltebereich (P) aufzunehmen und den Austrittsabschnitt (OUT) den mobilen Rahmen (103) tragend zu durchlaufen.

14. Bearbeitungsstation (100) nach einem der Ansprüche 11 bis 13, wobei das Aufnahmeelement (2; 202) an dem ortsfesten Rahmen (102) befestigt ist und der Zapfen (4, 4'; 204, 204') an dem mobilen Rahmen (103) befestigt ist.

15. Bearbeitungsstation (100) nach einem der Ansprüche 11 bis 14, wobei der erste Ring vier Rollen (8) umfasst, die mit gleichen Winkelabständen beabstandet sind, und der zweite Ring (10) vier Rollen umfasst, die mit gleichen Winkelabständen beabstandet sind, wobei jede Rolle des zweiten Rings (10) gegenüber einer benachbarten Rolle (8) des ersten Rings versetzt ist, vorzugsweise um 45°,
und wobei
- die vier Rollen (8) des ersten Rings ein erstes Paar Rollen (8), die entlang einer Längsrichtung (X) des ortsfesten Rahmens (102) ausgerichtet sind, und ein zweites Paar Rollen (8) umfassen, die entlang einer Querrichtung des ortsfesten Rahmens (102) ausgerichtet sind,
- der zylindrische Abschnitt (16) des Zapfens (4) einen Durchmesser hat, der im Wesentlichen mit dem Durchmesser des ersten Umfangs (C8) übereinstimmt, sodass die Rollen (8) des ersten Paars dazu ausgestaltet sind, eine Positionierungsreferenz entlang der Längsrichtung (X) bereitzustellen, und die Rollen (8) des zweiten Paars dazu ausgestaltet sind, eine Positionierungsreferenz entlang der Querrichtung (Y) bereitzustellen.

16. Bearbeitungsstation (100) nach Anspruch 14 oder Anspruch 15, wobei:
- der ortsfeste Rahmen (102) ein zweites Aufnahmeelement umfasst, wobei der erste Ring vier Rollen (8) umfasst, die mit gleichen Winkelabständen beabstandet sind, und der zweite Ring (10) vier Rollen umfasst, die mit gleichen Winkelabständen beabstandet sind, wobei jede Rolle des zweiten Rings (10) gegenüber einer benachbarten Rolle (8) des ersten Rings versetzt ist, vorzugsweise um 45°,
und wobei
- die vier Rollen (8) des ersten Rings ein erstes Paar Rollen (8), die entlang einer Längsrichtung (X) des ortsfesten Rahmens (102) ausgerichtet sind, und ein zweites Paar Rollen (8) umfassen, die entlang einer Querrichtung (Y) des ortsfesten Rahmens (102) ausgerichtet sind,
- der mobile Rahmen (103) einen zweiten Zapfen (4') umfasst, der dazu ausgestaltet ist, in die Öffnung des zweiten Aufnahmeelements (2) einzugreifen, wobei der zweite Zapfen (4') ein Paar Abflachungen (F) in Entsprechung zumindest mit dem zylindrischen Abschnitt (16) und diametral entgegengesetzt positioniert und entlang derselben Längsrichtung (X) ausgerichtet umfasst.

17. Bearbeitungsstation (100) nach Anspruch 16, wobei die Aufnahmeelemente (2, 2) auf derselben seitlichen Bank (104) des ortsfesten Rahmens (102) in einer in Längsrichtung beabstandeten Position angeordnet sind.

18. Bearbeitungsstation (100) nach Anspruch 12, wobei die Handhabungsvorrichtung ein fahrerloses Transportfahrzeug umfasst, insbesondere ein AGV (Automated Guided Vehicle).

19. Bearbeitungsstation (100) nach Anspruch 18, wobei das fahrerlose Transportfahrzeug einen oberen Abschnitt aufweist, der zum vertikalen Verstellen eingerichtet ist, wobei in Entsprechung mit dem oberen Abschnitt ein Zapfen (4, 4') eines Positionierungssystems (1,) nach Anspruch 1 vorgesehen ist, der zum Eingreifen in ein entsprechendes Aufnahmeelement (2) ausgestaltet ist, das an dem mobilen Rahmen (103) befestigt ist.

20. Bearbeitungsstation (100) nach Anspruch 12 oder Anspruch 18, umfassend eine Ausrückvorrichtung an der Schnittstelle zwischen der Handhabungsvorrichtung (V) und dem mobilen Rahmen (103), wobei die Ausrückvorrichtung (FL) dazu eingerichtet ist, eine Relativbewegung zwischen dem mobilen Rahmen und der Handhabungsvorrichtung (V) in Entsprechung mit der Schnittstelle zu ermöglichen.

21. Bearbeitungsstation (100) nach Anspruch 20, wobei die Ausrückvorrichtung (FL) eines oder mehrere von Folgendem umfasst:
- ein oder mehr Wälzelemente (BB),
- einen oder mehr Abschnitte oder Elemente aus einem reibungsarmen Material.

22. Bearbeitungsstation (100) nach Anspruch 19, wobei das fahrerlose Transportfahrzeug eine Ausrückvorrichtung (FL) umfasst, die dazu eingerichtet ist, eine Relativbewegung zwischen der oberen Oberfläche derselben und dem mobilen Rahmen (103) beim Aufnehmen oder Abgeben desselben von dem oder auf den ortsfesten Rahmen (102) zu ermöglichen.

23. Verfahren zum Abgeben eines mobilen Rahmens (103) in Entsprechung mit einer Bearbeitungsstation (100) nach Anspruch 11, wobei das Verfahren Folgendes umfasst:
- Positionieren mithilfe einer Handhabungsvorrichtung (V) des mobilen Rahmens (103) relativ zum ortsfesten Rahmen (102) durch Anordnen jedes Zapfens (4, 4'; 204, 204') in Entsprechung mit der Öffnung (O) des jeweiligen Aufnahmeelements (2; 202),
- Verschieben mithilfe der Handhabungsvorrichtung (V) des mobilen Rahmens (103) relativ zum ortsfesten Rahmen (102) entlang der Eingriffsrichtung (Z2; Z202), um den konischen Abschnitt (14; 214) jedes Zapfens (4; 204) zuerst und dann den zylindrischen Abschnitt (16; 2016) in die entsprechende Öffnung (O) einzuführen,
wobei das Verschieben weitergeht, bis der mobile Rahmen (103) auf Stützen (108) stoppt, die von dem ortsfesten Rahmen (102) getragen werden,
wobei während des Verschiebens der erste konische Abschnitt (14; 214) dazu eingerichtet ist, mit einer oder mehreren Rollen des mindestens einen Rings (8, 10; 208) zu interagieren, um einen Zustand der Ausrichtung zwischen einer Achse (Z4; Z204) des Zapfens und der Hauptachse (Z2; Z202) des Aufnahmeelements (2; 202) zu erreichen, und
wobei während des Verschiebens der zylindrische Abschnitt (16; 216) des Zapfens (4; 204) dazu eingerichtet ist, an einer Auswahl von Rollen (8) des mindestens einen Rollenrings (8, 10; 208) anzustoßen und dadurch die Position des mobilen Rahmens (103) relativ zum ortsfesten Rahmen (102) entlang einer Längsrichtung (X) und entlang einer Querrichtung (Y) festzulegen,
und ferner wobei:
- der zweite Abschnitt des Zapfens (4) des Positionierungssystems (1) ein zylindrischer Abschnitt (16) ist, der sich in Entsprechung mit dem ersten Ende (H4) erstreckt,
- das Aufnahmeelement (2) einen ersten Rollenring (8) und einen zweiten Rollenring (10) umfasst, wobei jede der Rollen des ersten Rings (8) und des zweiten Rings (10) eine Drehachse (γ8, γ10) hat, die zu einer zur Hauptachse (Z2) orthogonalen Ebene gehört, wobei der erste Rollenring (8) und der zweite Rollenring (10) die Öffnung (O) definieren,
- die Umfangsflächen der Rollen (8) des ersten Rings tangential zu einem ersten Umfang (C8) mit einem Mittelpunkt auf der Hauptachse (Z2) angeordnet sind,
- die Umfangsflächen der Rollen des zweiten Rings (10) tangential zu einem zweiten Umfang (C10) angeordnet sind, der einen Mittelpunkt auf der Hauptachse (Z2) aufweist, und
- der Durchmesser des ersten Umfangs (C8) kleiner als der Durchmesser des zweiten Umfangs (C10) ist, und
wobei während des Verschiebens der konische Abschnitt (14) dazu eingerichtet ist, mit einer oder mehreren Rollen des ersten Rings (8) und/oder einer oder mehreren Rollen des zweiten Rings (10) des entsprechenden Aufnahmeelements (2, 2) zu interagieren, um einen Zustand der Ausrichtung zwischen einer Achse (Z4) des Zapfens und der Hauptachse (Z2) des Aufnahmeelements (2) zu erreichen, und
wobei während des Verschiebens der zylindrische Abschnitt (16) des Zapfens (4) dazu eingerichtet ist, an den Rollen (8) des ersten Rings (8) anzustoßen und dadurch die Position des mobilen Rahmens (103) relativ zum ortsfesten Rahmen (102) entlang einer Längsrichtung (X) und entlang einer Querrichtung (Y) festzulegen, wobei die Rollen des ersten Rings die Auswahl von Rollen festlegen.

24. Verfahren nach Anspruch 23, wobei der ortsfeste Rahmen (102) zwei seitliche Bänke (104, 106) umfasst, die dazu ausgestaltet sind, einen mobilen Rahmen (103) zu tragen, und einen Eintrittsabschnitt (IN), einen Haltebereich (P) und einen Austrittsabschnitt (OUT) definieren, wobei:
- beim Positionieren die Handhabungsvorrichtung (V) den Eintrittsabschnitt (IN) den mobilen Rahmen (103) tragend durchläuft und sich selbst in Entsprechung mit dem Haltebereich (P) positioniert,
- beim Bewegen die Handhabungsvorrichtung (V) den mobilen Rahmen (103) auf den ortsfesten Rahmen (102) abgibt, wobei sie in Entsprechung mit dem Haltebereich (P) bleibt.

25. Verfahren nach Anspruch 24, wobei die Handhabungsvorrichtung (V) ferner den Austrittsabschnitt (OUT) des ortsfesten Rahmens (102) durchläuft, wenn das Abgeben des mobilen Rahmens (103) auf den ortsfesten Rahmen (102) abgeschlossen ist.

## Revendications

1. Élément de réception (2) pour un système de positionnement (1) d'un châssis mobile (103) par rapport à un châssis fixe (102), l'élément de réception (2) comprenant :
- un orifice (O) ayant un axe principal (Z2) définissant une direction d'engagement,
- une première couronne de rouleaux (8) et une seconde couronne de rouleaux (10), chacun des rouleaux de la première couronne (8) et de la seconde couronne (10) ayant un axe de rotation (γ8, γ10) appartenant à un plan orthogonal audit axe principal (Z2), la première couronne de rouleaux (8) et la seconde couronne de rouleaux (10) définissant ledit orifice (O), et
l'élément de réception étant **caractérisé en ce que** :
- les surfaces périphériques des rouleaux (8) de la première couronne sont agencées tangentiellement à une première circonférence (C8) ayant un centre sur ledit axe principal (Z2),
- les surfaces périphériques des rouleaux de la seconde couronne (10) sont agencées tangentiellement à une deuxième circonférence (C10) ayant un centre sur ledit axe principal (Z2), et
- le diamètre de la première circonférence (C8) est inférieur au diamètre de la deuxième circonférence (C10).

2. Élément de réception (2) selon la revendication 1, dans lequel la première couronne comprend quatre rouleaux (8) espacés à des distances angulaires égales, et la seconde couronne (10) comprend quatre rouleaux espacés à des distances angulaires égales, où chaque rouleau de la seconde couronne (10) est décalé, de préférence de 45°, par rapport à un rouleau adjacent (8) de la seconde couronne.

3. Système (1) pour positionner un châssis mobile (103), en particulier un châssis pour supporter des caisses de carrosseries de véhicules automobiles, par rapport à un châssis fixe (102), comprenant :
- un élément de réception (2) selon l'une des revendications 1 et 2, configuré pour être relié à l'un dudit châssis mobile (103) et dudit châssis fixe (102),
- une broche (4, 4') configurée pour être reliée à l'autre dudit châssis mobile (103) et dudit châssis fixe (102), et configurée pour le couplage dans ledit élément de réception (2) le long de la direction d'engagement (Z2),
dans lequel :
- la broche (4, 4') comprend une première extrémité (H4) et une seconde extrémité (R14), la première extrémité (H4) étant configurée pour être reliée à l'autre dudit châssis mobile (103) et dudit châssis fixe (102), et la seconde extrémité (R14) étant une extrémité libre, la broche (4, 4') comprenant en outre une première partie effilée (14 ; 214) s'étendant en correspondance avec ladite seconde extrémité (R14) et une seconde partie (16),
- dans lequel, lorsque la broche (4, 4') est reçue dans ledit orifice (O), une distance entre les surfaces périphériques des rouleaux de ladite première couronne de rouleaux (8) et de ladite seconde couronne de rouleaux (10) et ladite seconde partie (16 ; 216) de la broche (4, 4') est variable autour dudit axe principal (Z2),
le système (1) étant **caractérisé en ce que** :
- la broche (4, 4') comprend une partie cylindrique (16) s'étendant en correspondance avec ladite première extrémité (H4).

4. Système de positionnement (1) selon la revendication 3, dans lequel, lorsque la broche (4, 4') est reçue dans ledit orifice (O), au moins une zone de contact existe entre un rouleau de ladite au moins une couronne de rouleaux (8, 10) et la seconde partie de ladite broche (4, 4').

5. Système de positionnement (1) selon la revendication 4, dans lequel les rouleaux (8) de la première couronne sont agencés en alternance avec les rouleaux (10) de la seconde couronne.

6. Système de positionnement (1) selon la revendication 5, dans lequel les axes de rotation (γ8) des rouleaux de la première couronne (8) et les axes de rotation (γ10) des rouleaux de la seconde couronne (10) appartiennent au même plan orthogonal à l'axe principal (Z2).

7. Système de positionnement (1) selon la revendication 3 ou 6, dans lequel les rouleaux de la première couronne (8) et les rouleaux de la seconde couronne (10) ayant des axes de rotation (γ8, γ10) tangentiels à une seule circonférence ayant un centre sur l'axe principal (Z2), et dans lequel le diamètre des rouleaux de la première couronne (8) est supérieur au diamètre des rouleaux de la seconde couronne (10).

8. Système de positionnement (1) selon la revendication 3 ou 6, dans lequel les rouleaux de la première couronne (8) ont des axes de rotation (γ8) tangentiels à une troisième circonférence (C8*) ayant un centre sur l'axe principal (Z2), et les rouleaux de la seconde couronne (10) ont des axes de rotation (γ10) tangentiels à une quatrième circonférence (C10*), et dans lequel la troisième circonférence (C8*) a un diamètre inférieur à celui de la quatrième circonférence (C10*).

9. Système de positionnement (1) selon l'une des revendications 3 et 5 à 8, dans lequel la première couronne comprend quatre rouleaux (8) espacés à des distances angulaires égales, et la seconde couronne (10) comprend quatre rouleaux espacés à des distances angulaires égales, dans lequel chaque rouleau de la seconde couronne (10) est décalé, de préférence de 45°, par rapport à un rouleau adjacent (8) de la première couronne.

10. Système de positionnement (1) selon la revendication 9, dans lequel chaque rouleau de la seconde couronne (10) est décalé de 45° par rapport à un rouleau adjacent (8) de la première couronne.

11. Poste de traitement (100) pour caisses de carrosseries de véhicules automobiles, comprenant :
- un châssis mobile (103) pour supporter une caisse de carrosserie de véhicule automobile,
- un châssis fixe (102) fixé en particulier au sol, configuré pour supporter ledit châssis mobile (103),
- au moins un système de positionnement (1) pour le châssis mobile (103) par rapport au châssis fixe (102) selon l'une des revendications 3 à 10, dans lequel :
- au moins un élément de réception (2) est relié à l'un dudit châssis mobile (103) et dudit châssis fixe (102), de sorte que la direction d'engagement (Z2) soit alignée avec une direction verticale correspondante (Z) du poste (100), et
- au moins une broche correspondante (4, 4') est reliée à l'autre dudit châssis mobile (102) et dudit châssis fixe (103) et est configurée pour être couplée audit élément de réception (2).

12. Poste de traitement (100) selon la revendication 11, comprenant en outre un dispositif de manipulation (V) configuré, de manière sélective, pour libérer le châssis mobile (103) sur le châssis fixe (102) et retirer le châssis mobile (103) du châssis fixe (102),
dans lequel le dispositif de manipulation (V) est configuré pour coupler la broche (4, 4' ; 204, 204') dans l'élément de réception correspondant (2 ; 202) lors de la libération du châssis mobile (103) sur le châssis fixe (102), et pour extraire la broche (4, 4' ; 204, 204') de l'élément de réception correspondant (2 ; 202) lors du retrait du châssis mobile (103) du châssis fixe (102).

13. Poste de traitement (100) selon la revendication 12, dans lequel le châssis fixe (102) comprend deux bancs latéraux (104, 106) adaptés pour supporter le châssis mobile (103) et définissant une section d'entrée (IN), une zone de stationnement (P) et une section de sortie (OUT) du poste de traitement (100), dans lequel :
- lors de la libération du châssis mobile (103) sur le châssis fixe (102), le dispositif de manipulation (V) est configuré pour traverser la section d'entrée (IN) supportant le châssis mobile (103), libérer le châssis mobile (103) sur le châssis fixe (102) en correspondance avec la zone de stationnement (P) et traverser la section de sortie (OUT),
- lors du retrait du châssis mobile (103) du châssis fixe (102), le dispositif de manipulation (V) est configuré pour traverser la section d'entrée (IN), retirer le châssis mobile (103) du châssis fixe (102) en correspondance avec la zone de stationnement (P) et traverser la section de sortie (OUT) portant le châssis mobile (103).

14. Poste de traitement (100) selon l'une des revendications 11 à 13, dans lequel l'élément de réception (2 ; 202) est fixé au châssis fixe (102) et la broche (4, 4' ; 204, 204') est fixée au châssis mobile (103).

15. Poste de traitement (100) selon l'une des revendications 11 à 14, dans lequel la première couronne comprend quatre rouleaux (8) espacés à des distances angulaires égales, et la seconde couronne (10) comprend quatre rouleaux espacés à des distances angulaires égales, dans lequel chaque rouleau de la seconde couronne (10) est décalé, de préférence de 45°, par rapport à un rouleau adjacent (8) de la première couronne,
et dans lequel
- les quatre rouleaux (8) de la première couronne comprennent une première paire de rouleaux (8) alignés le long d'une direction longitudinale (X) du châssis fixe (102), et une seconde paire de rouleaux (8) alignés le long d'une direction transversale du châssis fixe (102),
- la partie cylindrique (16) de la broche (4) a un diamètre qui coïncide sensiblement avec le diamètre de la première circonférence (C8), de sorte que les rouleaux (8) de la première paire soient configurés pour fournir une référence de positionnement le long de la direction longitudinale (X), et les rouleaux (8) de la seconde paire soient configurés pour fournir une référence de positionnement le long de la direction transversale (Y).

16. Poste de traitement (100) selon la revendication 14 ou 15, dans lequel :
- le châssis fixe (102) comprend un second élément de réception dans lequel la première couronne comprend quatre rouleaux (8) espacés à des distances angulaires égales et la seconde couronne (10) comprend quatre rouleaux espacés à des distances angulaires égales, dans lequel chaque rouleau de la seconde couronne (10) est décalé, de préférence de 45°, par rapport à un rouleau adjacent (8) de la première couronne,
et dans lequel
- les quatre rouleaux (8) de la première couronne comprennent une première paire de rouleaux (8) alignés le long d'une direction longitudinale (X) du châssis fixe (102), et la seconde paire de rouleaux (8) alignés le long d'une direction transversale (Y) du châssis fixe (102),
- le châssis mobile (103) comprend une seconde broche (4') configurée pour s'engager dans l'orifice du second élément de réception (2), ladite seconde broche (4') comprend une paire d'aplatissements (F) en correspondance avec au moins ladite partie cylindrique (16) et positionnés diamétralement opposés et alignés le long de la même direction longitudinale (X).

17. Poste de traitement (100) selon la revendication 16, dans lequel les éléments de réception (2, 2) sont agencés sur le même banc latéral (104) du châssis fixe (102), dans une position espacée longitudinalement.

18. Poste de traitement (100) selon la revendication 12, dans lequel ledit dispositif de manipulation comprend un véhicule à guidage automatique, en particulier un AGV (Automated Guided Vehicle).

19. Poste de traitement (100) selon la revendication 18, dans lequel le véhicule à guidage automatique a une partie supérieure configurée pour effectuer une translation verticale, dans lequel, en correspondance avec ladite partie supérieure, est prévue une broche (4, 4') d'un système de positionnement (1) selon la revendication 1 configurée pour s'engager dans un élément de réception correspondant (2) fixé au châssis mobile (103).

20. Poste de traitement (100) selon la revendication 12 ou 18, comprenant un dispositif de désengagement au niveau de l'interface entre ledit dispositif de manipulation (V) et ledit châssis mobile (103), le dispositif de désengagement (FL) étant configuré pour permettre un mouvement relatif entre ledit châssis mobile et ledit dispositif de manipulation (V) en correspondance avec ladite interface.

21. Poste de traitement (100) selon la revendication 20, dans lequel ledit dispositif de désengagement (FL) comprend un ou plusieurs de ce qui suit :
- un ou plusieurs éléments roulants (BB),
- un ou plusieurs secteurs ou éléments en matériau à faible frottement.

22. Poste de traitement (100) selon la revendication 19, dans lequel ledit véhicule à guidage automatique comprend un dispositif de désengagement (FL) configuré pour permettre un mouvement relatif entre sa surface supérieure et ledit châssis mobile (103) lors du retrait ou de la libération de celui-ci du ou sur le châssis fixe (102).

23. Procédé pour libérer un châssis mobile (103) en correspondance avec un poste de traitement (100) selon la revendication 11, le procédé comprenant :
- le positionnement, au moyen d'un dispositif de manipulation (V), du châssis mobile (103) par rapport au châssis fixe (102) en agençant chaque broche (4, 4' ; 204, 204') en correspondance avec l'orifice (O) de l'élément de réception respectif (2 ; 202),
- le déplacement, au moyen du dispositif de manipulation (V), du châssis mobile (103) par rapport au châssis fixe (102) le long de la direction d'engagement (Z2 ; Z202) de manière à introduire d'abord la partie effilée (14 ; 214) de chaque broche (4 ; 204), puis la partie cylindrique (16 ; 2016), dans l'orifice correspondant (O),
dans lequel ledit déplacement se poursuit jusqu'à ce que le châssis mobile (103) s'arrête sur des supports (108) portés par ledit châssis fixe (102),
dans lequel, pendant ledit déplacement, la première partie effilée (14 ; 214) est configurée pour interagir avec un ou plusieurs rouleaux de ladite au moins une couronne (8, 10 ; 208) pour atteindre une condition d'alignement entre un axe (Z4 ; Z204) de la broche et l'axe principal (Z2 ; Z202) de l'élément de réception (2 ; 202), et
dans lequel, pendant ledit déplacement, la partie cylindrique (16 ; 216) de la broche (4 ; 204) est configurée pour venir en butée contre une sélection de rouleaux (8) de ladite au moins une couronne de rouleaux (8, 10 ; 208), établissant ainsi la position du châssis mobile (103) par rapport au châssis fixe (102) le long d'une direction longitudinale (X) et le long d'une direction transversale (Y),
et en outre dans lequel :
- la seconde partie de la broche (4) du système de positionnement (1) est une partie cylindrique (16) s'étendant en correspondance avec ladite première extrémité (H4),
- l'élément de réception (2) comprend une première couronne de rouleaux (8) et une seconde couronne de rouleaux (10), chacun des rouleaux de la première couronne (8) et de la seconde couronne (10) a un axe de rotation (y8, y10) appartenant à un plan orthogonal audit axe principal (Z2), la première couronne de rouleaux (8) et la seconde couronne de rouleaux (10) définissant ledit orifice (O),
- les surfaces périphériques des rouleaux (8) de la première couronne sont agencées tangentiellement à une première circonférence (C8) avec un centre sur ledit axe principal (Z2),
- les surfaces périphériques des rouleaux de la seconde couronne (10) sont agencées tangentiellement à une deuxième circonférence (C10) ayant un centre sur ledit axe principal (Z2), et
- le diamètre de la première circonférence (C8) est inférieur au diamètre de la deuxième circonférence (C10), et
dans lequel, pendant ledit déplacement, la partie effilée (14) est configurée pour interagir avec un ou plusieurs rouleaux de la première couronne (8) et/ou un ou plusieurs rouleaux de la seconde couronne (10) de l'élément de réception correspondant (2, 2) afin d'atteindre une condition d'alignement entre un axe (Z4) de la broche et l'axe principal (Z2) de l'élément de réception (2), et
dans lequel, pendant ledit déplacement, la partie cylindrique (16) de la broche (4) est configurée pour venir en butée contre les rouleaux (8) de la première couronne (8), établissant ainsi la position du châssis mobile (103) par rapport au châssis fixe (102) le long d'une direction longitudinale (X) et le long d'une direction transversale (Y), lesdits rouleaux de la première couronne définissant ladite sélection de rouleaux.

24. Procédé selon la revendication 23, dans lequel le châssis fixe (102) comprend deux bancs latéraux (104, 106) configurés pour supporter un châssis mobile (103) et définissant une section d'entrée (IN), une zone de stationnement (P) et une section de sortie (OUT), dans lequel :
- dans ledit positionnement, le dispositif de manipulation (V) traverse la section d'entrée (IN) portant le châssis mobile (103) et se positionne en correspondance avec ladite zone de stationnement (P),
- dans ledit mouvement, le dispositif de manipulation (V) libère le châssis mobile (103) sur le châssis fixe (102) en restant en correspondance avec la zone de stationnement (P).

25. Procédé selon la revendication 24, dans lequel, en outre, le dispositif de manipulation (V) traverse la section de sortie (OUT) du châssis fixe (102) lorsque la libération du châssis mobile (103) sur le châssis fixe (102) est terminée.
